# EUROPEAN PATENT APPLICATION

(11) **EP 4 797 849 A1**
(43) Date of publication of application: **26.08.2026**
(21) Application number: 24882676.0
(22) Date of filing: 26.09.2024
(51) Int. Cl.: H04W 72/27, H04L 5/00, H04W 28/02, H04W 52/36, H04W 72/1268, H04W 56/00, H04W 88/08, H04W 92/20, H04W 80/02

(54) **DEVICE, METHOD, AND STORAGE MEDIUM FOR COMMUNICATION BETWEEN DISTRIBUTED UNITS IN WIRELESS COMMUNICATION SYSTEM**

(30) Priority: 23.10.2023 KR 20230142481; 06.02.2024 KR 20240018490
(71) Applicant: Samsung Electronics Co., Ltd., Suwon-si, Gyeonggi-do 16677 (KR)
(72) Inventor: BAEK, Jooyoung, Suwon-si Gyeonggi-do 16677 (KR); LEE, Neunghyung, Suwon-si Gyeonggi-do 16677 (KR); KIM, Hyoji, Suwon-si Gyeonggi-do 16677 (KR); NA, Hyunjong, Suwon-si Gyeonggi-do 16677 (KR); SHIN, Daekyu, Suwon-si Gyeonggi-do 16677 (KR); LEE, Jimin, Suwon-si Gyeonggi-do 16677 (KR); CHO, Heenam, Suwon-si Gyeonggi-do 16677 (KR)
(74) Representative: Gulde & Partner
(86) International application number: PCT/KR2024/014666
(87) International publication number: WO 2025/089647

(57) **Abstract**

A device of a first distributed unit (DU) may comprise at least one processor, and a memory for storing instructions. The instructions, when executed individually or collectively by the at least one processor, may cause the device to: acquire information about a buffer status report (BSR) of a UE on a primary cell related to the first DU; and transmit a split BSR management message for uplink scheduling of a second DU to the second DU related to a secondary cell of carrier aggregation (CA) configured for the UE via an interface between the first DU and the second DU. The split BSR management message may include the identifier (ID) of the UE, an index of the primary cell, information about a time at which the BSR is received, logical channel group (LCG) ID information about the BSR, and split buffer occupancy (BO) to be used by the second DU.

## Description

### [Technical Field]

The following descriptions relate to a wireless communication system, and more particularly, to a device, a method, and a storage medium for communication between distributed units in the wireless communication system.

### [Background Art]

As a transmission capacity increases in a wireless communication system, a function split for that functionally separates a base station is being applied. According to the function split, the base station may be separated into a distributed unit (DU) and a radio unit (RU). A fronthaul interface is defined for communication between the DU and the RU.

Spectrum aggregation indicates a wireless communication technology that uses a certain frequency interval and a frequency interval different from the frequency interval together in a frequency domain.

### [Disclosure]

### [Technical Solution]

A device of a first distributed unit (DU) may comprise at least one processor comprising processing circuitry. The device may comprise memory, comprising one or more storage mediums, storing instructions. The instructions, when executed by the at least one processor individually or collectively, may cause the device to obtain information on a buffer status report (BSR) of a user equipment (UE) on a primary cell (PCell) related to the first DU. The instructions, when executed by the at least one processor individually or collectively, may cause the device to transmit, to a second DU related to a secondary cell (SCell) of carrier aggregation (CA) configured for the UE through an interface between the first DU and the second DU, a split BSR management message for uplink scheduling of the second DU. The split BSR management message may comprise an identifier (ID) of the UE, an index of the PCell, time information when the BSR is received, logical channel group (LCG) ID information of the BSR, and split buffer occupancy (BO) to be used by the second DU.

A method performed by a first distributed unit (DU) may comprise obtaining information on a buffer status report (BSR) of a user equipment (UE) on a primary cell (PCell) related to the first DU. The method may comprise transmitting, to a second DU related to a secondary cell (SCell) of carrier aggregation (CA) configured for the UE through an interface between the first DU and the second DU, a split BSR management message for uplink scheduling of the second DU. The split BSR management message may comprise an identifier (ID) of the UE, an index of the PCell, time information when the BSR is received, logical channel group (LCG) ID information of the BSR, and split buffer occupancy (BO) to be used by the second DU.

A non-transitory computer-readable storage medium may store one or more programs including instructions that, when individually or collectively executed by at least one processor comprising processing circuitry of a first distributed unit (DU), cause the first DU to obtain information on a buffer status report (BSR) of a user equipment (UE) on a primary cell (PCell) related to the first DU. The non-transitory computer-readable storage medium may store one or more programs including instructions that, when individually or collectively executed by the at least one processor, cause the first DU to transmit, to a second DU related to a secondary cell (SCell) of carrier aggregation (CA) configured for the UE through an interface between the first DU and the second DU, a split BSR management message for uplink scheduling of the second DU. The split BSR management message may comprise an identifier (ID) of the UE, an index of the PCell, time information when the BSR is received, logical channel group (LCG) ID information of the BSR, and split buffer occupancy (BO) to be used by the second DU.

### [Description of the Drawings]

FIG. 1A and FIG. 1B illustrate examples of a wireless communication system.
FIG. 2A to FIG. 2C illustrate examples of a spectrum aggregation environment.
FIG. 3 illustrates an example of a resource structure in a time domain and a frequency domain.
FIG. 4A illustrates an example of a protocol stack in a control plane.
FIG. 4B illustrates an example of a protocol stack in a user plane.
FIG. 5 illustrates an example of a functional configuration of an electronic device.
FIG. 6A illustrates an example of carrier aggregation (CA) between distributed units (DUs).
FIG. 6B illustrates an example of a protocol stack for CA between DUs.
FIG. 7A and FIG. 7B illustrate examples of a secondary cell (SCell) status management procedure for CA between DUs.
FIG. 8A and FIG. 8B illustrate examples of a buffer status report (BSR) management procedure for CA between DUs.
FIG. 9A to FIG. 9C illustrate examples of a split BSR management procedure for CA between DUs.
FIG. 10A and FIG. 10B illustrate examples of a power headroom report (PHR) management procedure for CA between DUs.
FIG. 11A to FIG. 11C illustrate examples of a split PHR management procedure for CA between DUs.
FIG. 12A and FIG. 12B illustrate examples of a physical uplink shared channel (PUSCH) resource allocation procedure for CA between DUs.
FIG. 13A and FIG. 13B illustrate examples of a timing advance (TA) management procedure of an SCell for CA between DUs.
FIG. 14A and FIG. 14B illustrate an example of a signal flow for a method of performing uplink resource allocation for a terminal in CA between DUs.
FIG. 15 illustrates an example of an operation flow for a method in which a first DU transmits a split BSR management message for uplink scheduling of a second DU.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., packet, message, signal, information, signaling), a term referring to a resource (e.g., section, symbol, slot, subframe, radio frame, subcarrier, resource element (RE), resource block (RB), bandwidth part (BWP), occasion), a term for an operation state (e.g., step, operation, procedure), a term referring to data (e.g., packet, message, user stream, information, bit, symbol, codeword), a term referring to a channel, a term referring to a network entity (e.g., distributed unit (DU), radio unit (RU), central unit (CU), CU-control plane (CP), CU-user plane (UP), O-DU (e.g., open (O)-radio access network (RAN) DU, O-RAN RU (O-RU), O-RAN CU (O-CU), O-RAN CU-UP (O-CU-UP), O-RAN CU-CP (O-CU-CP)), and a term referring to a component of a device, and the like, that are used in the following description, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, unless explicitly stated otherwise, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes embodiments using terms used in some communication standards (e.g., 3rd Generation Partnership Project (3GPP)), but this is only an example for description. Embodiments of the present disclosure may be applied in another communication system and a broadcast system.

Currently, discussions are underway on improving and enhancing an initial 5G mobile communication technology in consideration of services that a 5G mobile communication technology was intended to support and physical layer standardization for a technology such as Vehicle-to-Everything (V2X) to assist driving decision of an autonomous vehicles based on their location and status information transmitted by the vehicle and enhance user convenience, New Radio Unlicensed (NR-U) for a purpose of operating a system that meet various regulatory requirements in an unlicensed band, NR terminal low power consumption technology (UE Power Saving), Non-Terrestrial Network (NTN), which a terminal-satellite direct communication for securing coverage in areas where communication with terrestrial networks is impossible, positioning, and the like, is in progress.

Additionally, standardization of wireless interface architecture/protocol for a technology such as Industrial Internet of Things (IIoT) to support a new service through linkage and convergence with another industry, Integrated Access and Backhaul (IAB) to provide a node for expanding a network service area by integrating and supporting a wireless backhaul link and an access link, Mobility Enhancement including Conditional Handover and Dual Active Protocol Stack (DAPS) handover, 2-step RACH for NR to simplify a random access procedure, and the like is in progress, and standardization of a system architecture/service field for 5G baseline architecture (e.g., Service based Architecture, and Service based Interface) for grafting Network Functions Virtualization (NFV) and Software-Defined Networking (SDN) technologies and Mobile Edge Computing (MEC) that receives a service based on a location of a terminal is also in progress.

If such a 5G mobile communication system is commercialized, connected devices in an explosive increasing trend will be connected to a communication network, and accordingly, it is expected that a function and performance of the 5G mobile communication system will be strengthened and an integrated operation of the connected devices will be required. To this end, eXtended Reality (XR) to efficiently support Augmented Reality (AR), Virtual Reality (VR), and Mixed Reality (MR), improving 5G performance and reducing complexity using Artificial Intelligence (AI) and Machine Learning (ML), AI service support, metaverse service support, drone communication and the like.

In addition, this development of the 5G mobile communication system should be based on development of a multi-antenna transmission technology such as a new waveform, Full Dimensional MIMO (FD-MIMO), an Array Antenna, and a Large Scale Antenna, a metamaterial-based lens and antenna to improve coverage of a terahertz band signal, a high-dimensional spatial multiplexing technology using Orbital Angular Momentum (OAM), and a Reconfigurable Intelligent Surface (RIS) technology to ensure coverage in a terahertz band of a 6G mobile communication technology, as well as a Full Duplex technology, an AI-based communication technology that utilizes a satellite and an artificial intelligence from a design stage and internalizes an end-to-end AI support function to realize system optimization, and next-generation distributed computing technology that realize a service with complexity beyond a limit of a terminal computing capability by utilizing ultra-high performance communication and a computing resource, to enhance frequency efficiency and improve a system network of the 6G mobile communication technology, and the like.

Hereinafter, an example of 5G environments has been described, but this description does not limit a scope of a communication environment of embodiments of the present disclosure. A technical principle according to embodiments of the present disclosure may also be applied to 4G, 6G and post-6G communication technologies and network environments.

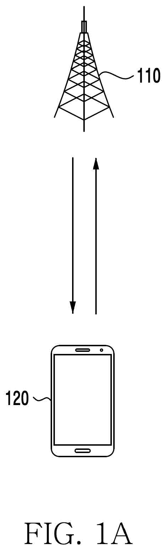

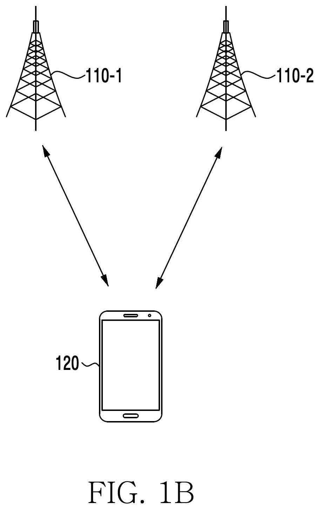

FIGS. 1A and 1B illustrate examples of a wireless communication system.

Referring to FIG. 1A, FIG. 1A illustrates a base station 110 and a terminal 120 as a portion of nodes that utilize a wireless channel in a wireless communication system. FIG. 1A illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1A, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

The terminal 120 may be configured with carrier aggregation (CA) for cells of the base station 110. A CA technology is a technology for increasing frequency usage efficiency of the terminal 120 and the base station 110 by connecting the terminal to a homogeneous wireless communication cell group having a common radio resource control entity and simultaneously using frequency resources on a component carrier (CC) of each cell located in different frequency bands for signal transmission and reception. Cells configured for the CA may include one primary cell (PCell) and one or more secondary cells (SCells).

Referring to FIG. 1B, the terminal 120 may be configured in dual connectivity (DC) using a first base station 110-1 and a second base station 110-2. A DC technology is a technology for increasing frequency usage efficiency by connecting the terminal simultaneously to two independent heterogeneous or homogeneous wireless communication cell groups having separate radio resource control entities and using frequency resources on a component carrier of a cell in each cell group located in different frequency bands for signal transmission and reception. For example, the terminal 120 may be connected to two different radio resource entities (e.g., the first base station 110-1 and the second base station 110-2), and may use radio resources allocated by each radio resource entity. In multi-radio DC (MR-DC), a UE (e.g., the terminal 120) in a radio resource control (RRC) connected state (i.e., RRC_CONNECTED) may be configured to use radio resources provided by two independent schedulers. Each scheduler may be located in an NG-RAN node (e.g., the first base station 110-1 or the second base station 110-2). Herein, one node is a master node (MN) and another node is a secondary node (SN). The MN and the SN may be connected through a network interface, and the MN may be connected to a core network. The SN may be connected or may not be connected to the core network.

The MN may provide a master cell group (MCG). The MN may be referred to as an M-NODE or an M-NG-RAN node in addition to the MN. The MCG may include one or more cells. The MCG may include a primary cell (PCell). The MCG may include a plurality of aggregated cells. The MCG may include the PCell and one or more secondary cells (SCells). The SN may provide a secondary cell group (SCG). The SN may be referred to as an S-NODE or an S-NG-RAN node in addition to the SN. The SCG may include one or more cells. The SCG may include a plurality of aggregated cells. Like the MCG, the SCG may include a PCell and/or an SCell. A cell functioning as a PCell within the SCG may be referred to as a primary secondary cell (PSCell). A secondary cell group may include the PSCell and one or more SCells. Hereinafter, a special cell (SpCell) may be used as a term including the PCell and the PSCell. The SpCell means a primary cell of the MCG or the SCG. In other words, the SpCell of the MCG refers to the PCell, and the SpCell of the SCG refers to the SCell.

Possible types of DC may be defined as follows.
1) EN-DC: Dual connectivity in which an eNB is connected to an evolved packet core (EPC), and the terminal is connected to an eNB acting as the MN and a gNB acting as the SN. Herein, the gNB may be referred to as an en-gNB, and the en-gNB may be connected or may not be connected to the EPC.
2) NGEN-DC: Dual connectivity in which an eNB is connected to a 5G core (5GC), and the terminal is connected to an eNB acting as the MN and a gNB acting as the SN. Herein, the eNB may be referred to as an ng-eNB.
3) NE-DC: Dual connectivity in which a gNB is connected to the 5GC, and the terminal is connected to a gNB acting as the MN and an eNB acting as the SN. Herein, the eNB may be referred to as an ng-eNB.
4) NR-DC: Dual connectivity in which gNBs are connected to the 5GC, and the terminal is connected to a gNB acting as the MN and a gNB acting as the SN. NR-DC may be used even in a case that the UE performs roles of both the MN and the SN and configures both the MCG and the SCG by being connected to a single gNB.

The terminal 120 may support MR-DC. The terminal 120 may be connected to the first base station 110-1 and the second base station 110-2. The first base station 110-1 is the MN and the second base station 110-2 is the SN, and may be connected to the terminal. Together with CA provided by each base station, the DC technology may provide a higher data rate. The first base station 110-1 and the second base station 110-2, as the MN and the SN, respectively, may transmit downlink traffic to the terminal 120 or receive uplink traffic from the terminal 120.

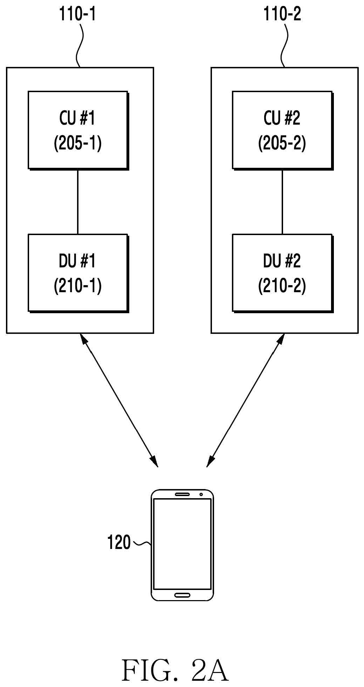

FIGS. 2A to 2C illustrate examples of a spectrum aggregation environment.

Spectrum aggregation refers to a wireless communication technology using a specific frequency interval and another frequency interval different from the frequency interval together in a frequency domain. The frequency intervals may correspond to at least one of a resource block (RB), a bandwidth part (BWP), a bandwidth, a cell, a cell group, a frequency band, and/or a frequency range, according to a used technology. For example, spectrum aggregation may include CA. A bandwidth of a primary cell (PCell) and a bandwidth of a secondary cell (SCell) may be used together for data communication. For example, spectrum aggregation may include DC. A frequency domain occupied by a cell of an MCG of an MN and a frequency domain occupied by a cell of an SCG of an SN may be used together for communication. For example, spectrum aggregation may include a coordinated multi-point operation (CoMP). Base stations having different frequency spectrums may be used for data communication. For example, spectrum aggregation may include multi (M)-transmission reception point (TRP). Resources allocated for different frequency domains may be used in data transmission.

A cell may indicate an area (or coverage) coverable by one base station (e.g., gNB) (or one distributed unit (DU) (or a digital unit (DU))). A cell may indicate not only a geographical area but also an area occupying a specific spectrum in a frequency domain. A distributed unit (DU) may cover one cell or may cover multiple cells. Herein, the multiple cells may be distinguished by a supporting frequency and an area of a covering sector. A serving cell, which is a cell providing a terminal and upper layer signaling (e.g., radio resource control (RRC) signaling), may indicate one cell or multiple cells. In a case that a terminal 120 is not configured to support carrier aggregation (CA) and dual connectivity (DC), the serving cell may be one cell corresponding to a primary cell (PCell). In a case that the terminal 120 is configured to support CA or DC, the serving cell may be a set of cells including a PCell and one or more SCells.

In the present disclosure, a base station (e.g., a base station 110, a first base station 110-1, or a second base station 110-2) may be implemented as a distributed deployment according to a central unit (CU) (or a control unit (CU)) configured to perform a function of upper layers of an access network and a distributed unit (DU) configured to perform a function of lower layers. The CU and the DU may indicate an independent network entity for the access network (or which may be referred to as a network node, a network equipment, or a network device). The CU may be connected to one or more DUs, and may be responsible for a function of upper layers (e.g., a packet data convergence protocol (PDCP) protocol and a radio resource control (RRC) protocol) than the DU. The DU may be responsible for a function of lower layers (e.g., a radio link control (RLC) layer, a medium access control (MAC) layer, and a physical (PHY) layer). Hereinafter, operations of the CU and the DU are described unless separately defined, but an implementation scheme according to embodiments of the present disclosure is not limited thereto. As a non-limiting example, the DU may be connected to a radio unit (RU), the DU may perform some functions (high PHY) of an RLC layer, a MAC layer, and a physical (PHY) layer, and the RU may be responsible for remaining functions (low PHY) of the PHY layer.

Referring to FIG. 2A, a base station (e.g., the base station 110, the first base station 110-1, or the second base station 110-2) may be separated into a central unit (CU) and a DU. The CU and the DU may be connected through an F1 interface. The DU may support one or more cells, and a cell may be supported only by one DU. The first base station 110-1 may include a CU #1 205-1 and a DU #1 210-1. The DU #1 210-1 may provide one or more cells. The second base station 110-2 may include a CU #2 205-2 and a DU #2 210-2. The DU #2 210-2 may provide one or more cells. For example, for a DC operation, an MgNB-DU may indicate a gNB-DU (e.g., the DU #1 210-1) of an en-gNB or a gNB serving as a master node, and an SgNB-DU may indicate a gNB-DU (e.g., the DU #2 210-2) of an en-gNB or a gNB serving as a secondary node. In terms of the terminal 120, the CU #1 205-1 and a DU #1 231 may operate as a logical node (e.g., a gNB) corresponding to a base station, and the CU #2 205-2 and a DU #2 232 may operate as a logical node (e.g., a gNB) corresponding to another base station. According to an embodiment, the terminal 120 may access a network through a cell provided by the DU #1 231 and a cell provided by the DU #2 232.

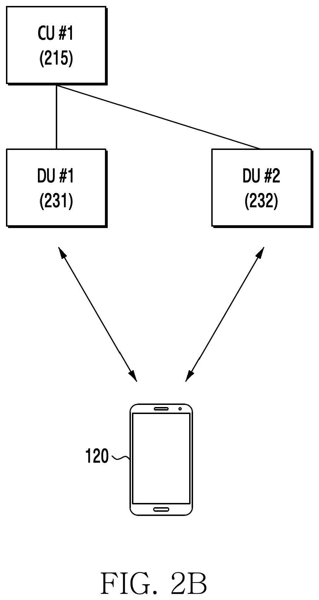

Referring to FIG. 2B, a base station (e.g., the base station 110, the first base station 110-1, or the second base station 110-2) may be separated into a CU and a DU. Unlike a case that a plurality of independent base stations (e.g., the first base station 110-1 and the second base station 110-2) service the terminal 120, one CU and multiple DUs may service the terminal 120. For example, a CU #1 215 may be connected to a DU #1 231 and a DU #2 232. The CU #1 215 may be connected to each of the DU #1 231 and the DU #2 232 through an F1 interface. The DU #1 231 may provide one or more cells. The DU #2 232 may provide one or more cells. For example, for a CA operation, the DU #1 231 may provide a cell corresponding to a PCell. The DU #2 232 may provide a cell corresponding to an SCell. In terms of the terminal 120, the CU #1 215 and the DU #1 231 may operate as a logical node (e.g., a gNB) corresponding to a base station, and the CU #1 215 and the DU #2 232 may operate as a logical node (e.g., gNB) corresponding to another base station. According to an embodiment, the terminal 120 may access a network through carrier aggregation (CA) using a cell (e.g., the PCell) provided by the DU #1 231 and a cell (e.g., the SCell) provided by the DU #2 232. Two cells for CA may be configured for the terminal 120.

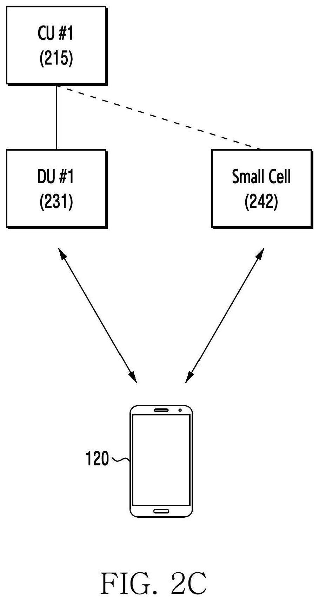

Referring to FIG. 2C, a base station may be separated into a CU and a DU. In addition to a distributed deployment separated into the CU and the DU, a node 242 for a small cell may be additionally disposed. For example, a CU #1 215 may be connected to a DU #1 231 through an F1 interface. The node 242, which is an independent entity, may perform communication with the CU #1 215. The DU #1 231 may provide one or more cells. The node 242 may provide one or more small cells. For example, for a CA operation, the DU #1 231 may provide a cell corresponding to a PCell. The node 242 may provide a cell corresponding to an SCell. In terms of the terminal 120, the CU #1 215 and the DU #1 231 may operate as a logical node (e.g., a gNB) corresponding to a base station, and the CU #1 215 and the node 242 may operate as a logical node (e.g., a gNB) corresponding to another base station. According to an embodiment, the terminal 120 may access a network through CA using a cell (e.g., the PCell) provided by the DU #1 231 and a cell (e.g., the SCell) provided by the DU #2 232. Two cells for CA may be configured for the terminal 120.

Vendors of DUs (or a DU and a node providing a small cell) may be different from each other. Frequency intervals used between multi-vendors may not satisfy compatibility with each other. For example, a vendor of a first DU and a vendor of a second DU may have different purchased frequency bands from each other. A frequency domain occupied by a cell provided in the first DU may be different from a frequency domain occupied by a cell provided in the second DU. Since the second DU may not accurately know information on the cell of the first DU, it may be difficult to configure CA between two cells. If CA of the two cells is configured, since there is no interface between the first DU and the second DU, signaling through a CU or a higher entity may be required. However, since an increase in signaling causes a delay, effective resource management may be difficult.

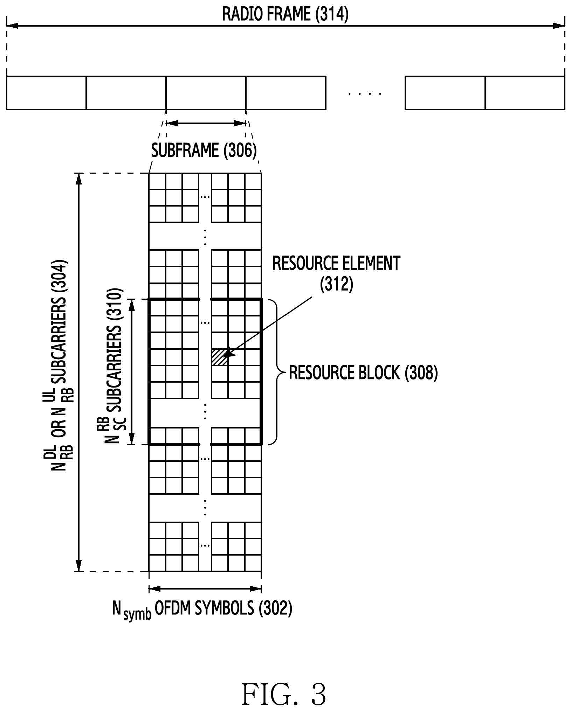

Hereinafter, in embodiments of the present disclosure, an interface between DUs (e.g., which may be referred to as an X1 interface), and procedures and messages for configuring the interface are described for spectrum aggregation, such as the above-described CA or DC. First, resources in a physical layer are described through FIG. 3.

FIG. 3 illustrates an example of a resource structure in a time domain and a frequency domain.

FIG. 3 exemplifies a basic structure of a time-frequency domain, which is a radio resource region in which data or a control channel is transmitted in a downlink or an uplink.

Referring to FIG. 3, a horizontal axis indicates a time domain, and a vertical axis indicates a frequency domain. A minimum transmission unit in the time domain is an orthogonal frequency division multiplexing (OFDM) symbol, and N_{symb} OFDM symbols 302 are gathered to configure a slot 306. A length of a subframe is defined as 1.0 ms, and a length of a radio frame 314 is defined as 10 ms. A minimum transmission unit in the frequency domain is a subcarrier, and a carrier bandwidth configuring a resource grid is configured with subcarriers 304 of N^{DL}_{RB} downlink or N^{UL}_{RB} uplink.

A basic unit of a resource in the time-frequency domain is a resource element (hereinafter, 'RE') 312, may be indicated by an OFDM symbol index and a subcarrier index. A resource block may include a plurality of resource elements. In an LTE system, a resource block (RB) (or a physical resource block (hereinafter, 'PRB')) is defined as N_{symb} consecutive OFDM symbols in the time domain and N_{SC}^{RB} consecutive subcarriers in the frequency domain. In an NR system, an RB 308 may be defined as N_{SC}^{RB} consecutive subcarriers 310 in the frequency domain. One RB 308 includes N_{SC}^{RB} REs 312 in a frequency axis. In general, a minimum transmission unit of data is an RB, and the number of subcarriers is N_{SC}^{RB}=12. The frequency domain may include common resource blocks (CRBs). A physical resource block (PRB) may be defined in a bandwidth part (BWP) on the frequency domain. CRB and PRB numbers may be determined according to subcarrier spacing. A data rate may increase in proportion to the number of RBs scheduled for a terminal.

In an NR system, in a case of a frequency division duplex (FDD) system operating by dividing a downlink and an uplink by a frequency, a downlink transmission bandwidth and an uplink transmission bandwidth may be different from each other. A channel bandwidth indicates a radio frequency (RF) bandwidth corresponding to a system transmission bandwidth. [Table 1] indicates a portion of a correspondence relationship between a system transmission bandwidth, subcarrier spacing (SCS), and a channel bandwidth defined in an NR system in a frequency band lower than x GHz (e.g., frequency range (FR) 1 (310 MHz to 7125 MHz)). In addition, [Table 2] indicates a portion of a correspondence relationship between a transmission bandwidth, subcarrier spacing, and a channel bandwidth defined in an NR system in a frequency band higher than yGHz (e.g., FR2 (24250 MHz to 52600 MHz) or FR2-2 (52600 MHz to 71000 MHz)). For example, an NR system having a 100 MHz channel bandwidth with 30 kHz subcarrier spacing is configured with a transmission bandwidth of 273 RBs. In [Table 1] and [Table 2], N/A may be a bandwidth-subcarrier combination not supported in the NR system.

**[Table 1]**

| Channel Bandwidth [MHz] | SCS | 5 | 10 | 20 | 50 | 80 | 100 |
|---|---|---|---|---|---|---|---|
| Transmission Bandwidth Configuration N_{RB} | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| Channel Bandwidth [MHz] | SCS | 50 | 100 | 200 | 400 |
|---|---|---|---|---|---|
| Transmission Bandwidth Configuration N_{RB} | 60kHz | 66 | 132 | 264 | N/A |
| | 120kHz | 32 | 66 | 132 | 264 |

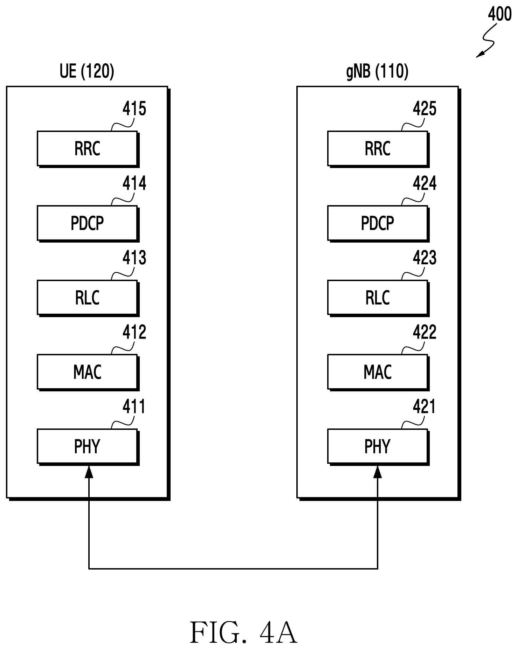

FIG. 4A illustrates a protocol stack in a control plane.

Referring to FIG. 4A, in an NR communication system, a wireless protocol of a control plane of a terminal 120 (e.g., a UE) may include PHY 411, MAC 412, RLC 413, a PDCP 414, and RRC 415. In the NR communication system, a wireless protocol of a control plane of a base station 110 (e.g., a gNB) may include PHY 421, MAC 422, RLC 423, a PDCP 424, and RRC 425.

Main functions of the RRC 415 and 425 may include a portion of the following functions.
- System information broadcast related to access stratum (AS) and non access stratum (NAS)
- Paging initiated by a 5GC or an NG-RAN
- RRC connection establishment, maintenance, and release between a UE and an NG-RAN, including the following:
   1) addition, modification, and release of carrier aggregation
   2) addition, modification, and release of dual connectivity in an NR or between E-UTRA and an NR.
- Security functions including key management
- Establishment, configuration, maintenance, and release of a Signaling Radio Bearer (SRB) and a Data Radio Bearer (DRB)
- Mobility functions including the following:
   1) Handover and context transfer
   2) UE cell selection and reselection and control of cell selection and reselection
   3) Inter-RAT mobility
- Quality of service (QoS) management functions
- UE measurement reporting and reporting control;
- Detection of and recovery from radio link failure
- Transmission of an NAS message to/from a NAS from/to a UE.

Main functions of the PDCPs 414 and 424 may include a portion of the following functions.
- Header compression and decompression function: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the above-described content, a reordering function of a PDCP layer may indicate a function of reordering PDCP PDUs received from a lower layer in order based on a PDCP sequence number (SN). The reordering function of the PDCP layer may include a function of delivering data to an upper layer in an reordered order, may include a function of immediately delivering the data without considering an order, may include a function of recording lost PDCP PDUs by reordering the order, may include a function of delivering a status report for the lost PDCP PDUs to a transmission side, and may include a function of requesting retransmission for the lost PDCP PDUs.

Main functions of the RLC 413 and 423 may include a portion of the following functions.
- Transfer of upper layer PDUs
- In-sequence delivery of upper layer PDUs
- Out-of-sequence delivery of upper layer PDUs
- Error correction through ARQ
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

In the above-described content, an in-sequence delivery function of an RLC layer may indicate a function of delivering RLC SDUs received from a lower layer to an upper layer in order. In a case that one original RLC SDU is divided into a plurality of RLC SDUs and received, the in-sequence delivery function of the RLC layer may include a function of reassembling and delivering them.

The in-sequence delivery function of the RLC layer may include a function of reordering received RLC PDUs based on an RLC sequence number (SN) or a PDCP sequence number (SN), may include a function of recording lost RLC PDUs by reordering the order, may include a function of delivering a status report for the lost RLC PDUs to a transmission side, and may include a function of requesting retransmission for the lost RLC PDUs.

The in-sequence delivery function of the RLC layer may include a function of delivering only RLC SDUs up to before the lost RLC SDU to an upper layer in order even in a case that there is a lost RLC SDU. In addition, the in-sequence delivery function of the RLC layer may include a function of delivering, to the upper layer, all RLC SDUs received before a timer started in order if the predetermined timer has expired even in a case that there is a lost RLC SDU. In addition, the in-sequence delivery function of the RLC layer may include a function of delivering, to the upper layer, all RLC SDUs received up to the present in order if the predetermined timer has expired even in a case that there is a lost RLC SDU.

The RLC layer may process RLC PDUs in a received order and deliver them to PDCP 405 and 440 devices regardless of an order of sequence numbers (out-of-sequence delivery).

In a case that the RLC layer receives a segment, the RLC layer may receive segments stored in a buffer or to be received later, reconstruct them as one complete RLC PDU, and then deliver them to the PDCP device.

The RLC layer may not include a concatenation function, and may perform a function in a MAC layer or may replace it with a multiplexing function of the MAC layer.

In the above-described content, an out-of-sequence delivery function of the RLC layer may mean a function of immediately delivering RLC SDUs received from a lower layer to an upper layer regardless of an order. In a case that one original RLC SDU is divided into a plurality of RLC SDUs and received, the out-of-sequence delivery function of the RLC layer may include a function of reassembling and delivering them. The out-of-sequence delivery function of the RLC layer may include a function of storing an RLC SN or a PDCP SN of received RLC PDUs, reordering an order, and recording lost RLC PDUs.

The MAC 412 and 422 may be connected to multiple RLC layers configured in a terminal, and main functions of the MAC may include a portion of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The PHY 411 and 421 may perform an operation of channel coding and modulating upper layer data and transmitting them through a radio channel by generating them as an OFDM symbol, or demodulating and channel decoding the OFDM symbol received through the radio channel and delivering them to an upper layer.

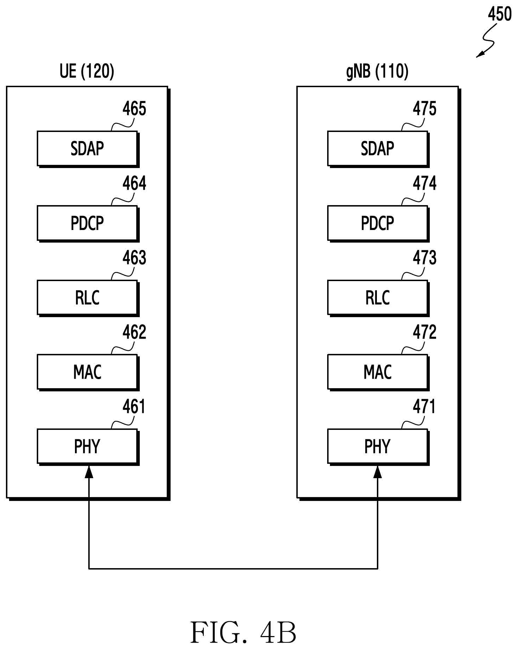

FIG. 4B illustrates an example of a protocol stack in a user plane.

Referring to FIG. 4B, a wireless protocol of a user plane of a terminal 120 (e.g., a UE) may include PHY 461, MAC 462, RLC 463, a PDCP 464, and an SDAP 465. In an NR communication system, a wireless protocol of a user plane of a base station 110 (e.g., a gNB) may include PHY 471, MAC 472, RLC 473, a PDCP 474, and an SDAP 475.

Main functions of the SDAPs 465 and 475 may include a portion of the following functions.
- Transfer of user plane data
- Mapping between a QoS flow and a DRB for both DL and UL
- Marking QoS flow ID in both DL and UL packets
- Reflective QoS flow to DRB mapping for the UL SDAP PDUs.

For an SDAP layer, the terminal 120 may be configured with whether to use a header of the SDAP layer or whether to use a function of the SDAP layer for each PDCP layer, for each bearer, or for each logical channel, as a Radio Resource Control (RRC) message. In a case that the SDAP header is configured, the terminal 120 may instruct, by a 1-bit indicator for Non-Access Stratum (NAS) Quality of Service (QoS) reflective configuration (NAS reflective QoS) and a 1-bit indicator for Access Stratum (AS) QoS reflective configuration (AS reflective QoS) of the SDAP header, that the terminal 120 updates or reconfigures mapping information on a QoS flow and a data bearer of an uplink and a downlink. The SDAP header may include QoS flow ID information indicating QoS. The QoS information may be used as data processing priority, scheduling information, and the like for supporting a smooth service.

For the PDCPs 464 and 474 in the user plane, the description for the PDCPs 414 and 424 in the control plane may be referred to. For the RLC 463 and 473 in the user plane, the description for the RLC 413 and 423 in the control plane may be referred to. For the MAC 462 and 472 in the user plane, the description for the MAC 412 and 422 in the control plane may be referred to. For the PHY 461 and 471 in the user plane, the description for the PHY 411 and 421 in the control plane may be referred to.

Although the wireless protocol of the NR communication system in a radio access network has been described as an example, embodiments of the present disclosure are not limited thereto. For example, also in an LTE communication system, a DU (e.g., an eNB-DU) may be defined, and in this case, the SDAPs 465 and 475 may be omitted. Embodiments of the present disclosure provide procedures of an interface between DUs or an interface between a DU and a base station (e.g., an eNB/gNB), for spectrum aggregation applicable in a 4G, 5G, and/or 6G system, and thus, in addition to the communication protocol of FIG. 4B, various types of layers or protocols may be used.

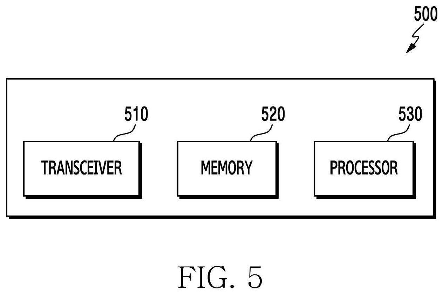

FIG. 5 illustrates an example of a functional configuration of an electronic device.

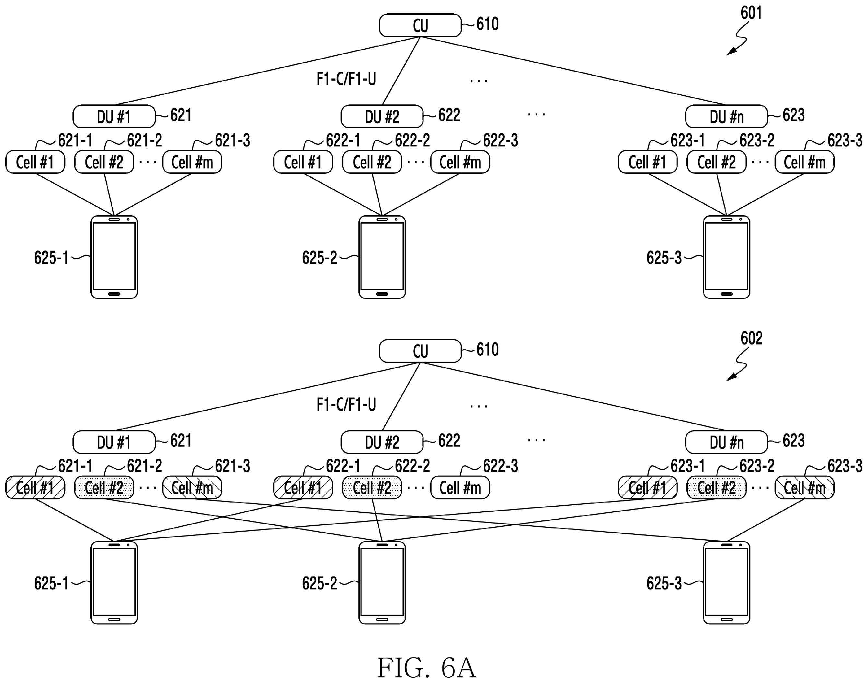

A configuration of an electronic device 500 illustrated in FIG. 5 may be understood as a configuration of a base station 110, a terminal 120, and a DU (e.g., the DU #1 210-1 and the DU #2 210-2 of FIG. 2A, the DU #1 231 of FIG. 2B or FIG. 2C, and a DU #1 621, a DU #2 622, and a DU #n 623 of FIG. 6A). A term such as '...unit' or '...device' used below refers to a unit for processing at least one function or operation, and it may be implemented as hardware, software, or a combination of hardware and software.

Referring to FIG. 5, the electronic device 500 may include a transceiver 510, memory 520, and a processor 530. However, the present disclosure is not limited thereto. For example, the electronic device 500 may not include at least a portion of components illustrated in FIG. 5, or may further include components not illustrated in FIG. 5.

The transceiver 510 may perform functions for transmitting and receiving a signal in a wired communication environment. The transceiver 510 may include a wired interface for controlling a direct connection between a device and a device through a transmission medium (e.g., a copper wire, or an optical fiber). For example, the transceiver 510 may transmit an electrical signal to another device through a copper wire, or may perform conversion between an electrical signal and an optical signal.

The transceiver 510 may perform functions for transmitting and receiving a signal in a wireless communication environment. For example, the transceiver 510 may perform a function of converting between a baseband signal and a bit stream according to a physical layer specification of a system. For example, when transmitting data , the transceiver 510 generates complex-valued symbols by encoding and modulating a transmission bit stream. In addition, when receiving data, the transceiver 510 restores a reception bit stream through demodulation and decoding of a baseband signal. In addition, the transceiver 510 may include a plurality of transmission and reception paths.

The transceiver 510 transmits and receives a signal as described above. Accordingly, all or a portion of the transceiver 510 may be referred to as a communication unit, a transmission unit, a reception unit, or a transmission and reception unit. In addition, in the following description, transmission and reception performed through a wireless channel is used as a meaning including that processing as described above is performed by the transceiver 510.

Although not illustrated in FIG. 5, the transceiver 510 may further include a backhaul transceiver for being connected to a core network or another base station. The backhaul transceiver provides an interface for performing communication with other nodes in a network. That is, the backhaul transceiver converts a bit stream transmitted from the base station to another node, for example, another access node, another base station, an upper node, or a core network, into a physical signal, and converts the physical signal received from the another node into a bit stream.

The memory 520 stores data such as a basic program, an application program, setting information, and the like, for an operation of the electronic device 500. The memory 520 may be referred to as a storage unit. The memory 520 may be configured as a volatile memory, a non-volatile memory, or a combination of a volatile memory and a non-volatile memory. In addition, the memory 520 provides stored data according to a request of the processor 530.

For example, the processor 530 may include various processing circuitry and/or a plurality of processors. For example, the term "processor" used in the present document, including the claims, may include various processing circuitry including at least one processor, and one or more of the at least one processor may be configured to individually and/or collectively perform various functions described below in a distributed manner. As used herein, in a case that the terms "processor", "at least one processor", and "one or more processors" are described as being configured to perform various functions, these terms encompass, for example, without limitation, situations in which one processor performs a portion of cited functions and another processor(s) performs another portion of the cited functions, and also situations in which one processor performs all of cited functions. Additionally, the at least one processor may include a combination of processors that perform the enumerated/disclosed various functions, for example, in a distributed manner. The at least one processor may execute program instructions to achieve or perform various functions.

The processor 530 controls overall operations of the electronic device 500. The processor 580 may be referred to as a control unit. For example, the processor 530 transmits and receives a signal through the transceiver 510 (or through a backhaul communication unit). In addition, the processor 530 writes data in the memory 520, and reads data from the memory 520. In addition, the processor 530 may perform functions of a protocol stack required in a communication standard. Although only the processor 530 is illustrated in FIG. 5, according to another implementation example, the electronic device 500 may include two or more processors.

The configuration of the electronic device 500 illustrated in FIG. 5 is only an example, and an example of the electronic device 500 that performs embodiments of the present disclosure is not limited by the configuration illustrated in FIG. 5. In some embodiments, a partial configuration may be added, deleted, or changed.

As communication technology develops, the number of network entities increases, and performing communication with an external node (e.g., a base station, or another DU) through a CU causes a delay, and thus an interface between DUs or an interface between a DU and the base station needs to be defined. Hereinafter, for spectrum aggregation, such as the CA described above, a new interface and procedures and messages for configuring the interface are proposed. Hereinafter, the procedures and the messages related to the interface between DUs are described, but corresponding descriptions may be applied in the same or similar manner to an interface between a DU and an independent base station (e.g., a base station of a small cell). In the present disclosure, in describing the interface between DUs, the DUs may be the same vendor, or may be different vendors. That is, even between DUs of another vendor, an exchange of information may be performed through the interface and the messages described below.

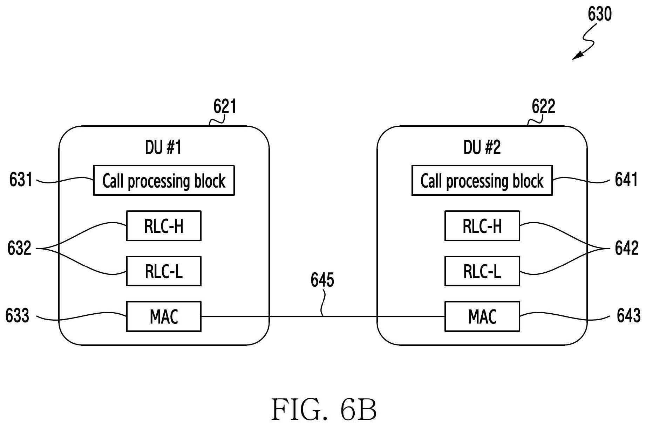

FIG. 6A illustrates an example of carrier aggregation (CA) between distributed units (DUs). FIG. 6B illustrates an example of a protocol stack for CA between DUs.

FIG. 6A illustrates examples 601 and 602 of a communication network that provides CA between DUs 621, 622, and 623. The example 601 illustrates an example in which CA which cells of each of the DUs 621, 622, and 623 are aggregated is configured for a terminal. The example 602 illustrates an example in which CA in which cells between the DUs 621, 622, and 623 are aggregated is configured for the terminal.

Referring to FIG. 6A, the communication network may include a radio access network and a core network. A node that provides the radio access network (e.g., a base station 110) may provide a communication service to a user equipment (e.g., a terminal 120) through one or more cells. The core network may include various entities so that the communication service may be smoothly performed. For example, the core network may include an entity that is responsible for an access management function (AMF). For example, the core network may include an entity that is responsible for a user plane function (UPF). However, the present disclosure is not limited thereto. The core network may be implemented through the radio access network and an NG interface. The NG interface may include an NG-C interface for a control plane and an NG-U interface for a user plane. The NG-C interface may be defined between the node that provides the radio access network and the AMF. The NG-U interface may be defined between the node that provides the radio access network and the UPF.

For example, the node that provides the radio access network may be implemented as a distributed deployment according to a central unit (CU) (or control unit (CU)) 610 configured to perform functions of upper layers (e.g., PDCP, or RRC) of an access network and a distributed unit (DU) configured to perform functions of lower layers (e.g., RLC, MAC, or PHY). An interface between the CU 610 and the DU may be referred to as an F1 interface. The F1 interface may include an F1-C interface for a control plane and an F1-U interface for a user plane. The CU 610 may be connected to one or more DUs 621, 622, and 623. For example, the CU 610 may be connected to the DU #1 621, the DU #2 622, ..., and a DU #n 623. Each DU may provide one or more cells. For example, the DU #1 621 may provide a cell #1 621-1, a cell #2 621-2, ..., and a cell #m 621-3. For example, the DU #2 622 may provide a cell #1 622-1, a cell #2 622-2, ..., and a cell #m 622-3. For example, the DU #n 623 may provide a cell #1 623-1, a cell #2 623-2, ..., and a cell #m 623-3. In FIG. 6A, an example in which the same number m of cells are provided by one DU is illustrated, but the present disclosure is not limited thereto. For example, the DUs 621, 622, and 623 may provide different numbers of cells. In addition, one or more cells provided by each of the DUs 621, 622, and 623 may correspond to (or be related to) one or more radio units (RUs). For example, an RU may be used to provide one or more cells.

In Carrier aggregation (CA), two or more cells may be aggregated. A cell may have a component carrier (CC). The terminal may simultaneously receive or transmit signals through one or a plurality of CCs according to a capability. In RRC connection establishment/re-establishment/handover, one serving cell provides NAS mobility information, and in RRC connection re-establishment/handover, one serving cell may provide a security input. The serving cell may be referred to as a primary cell (PCell). A secondary cell (SCell) may be configured to form a serving cell set together with the PCell according to a UE capability. The serving cell set configured for the terminal may always be configured with one PCell and one or more SCells. Reconfiguration, addition, and removal of the SCell may be performed by RRC. During handover within an NR and during resuming a connection in RRC_INACTIVE, a network may also add, remove, maintain, or reconfigure an SCell to be used together with a target PCell. When adding a new SCell, dedicated RRC signaling may be used to transmit all required system information of the SCell.

Referring to the example 601, the cells 621-1, 621-2, and 621-3 of the DU #1 621 may be aggregated for a terminal 625-1. For example, among the cells 621-1, 621-2, and 621-3, the cell #1 621-1 may be configured as a serving cell (or a PCell) for the terminal 625-1. Among the cells 621-1, 621-2, and 621-3, the cell #2 621-2 and the cell #m 621-3 may be configured as SCells for the terminal 625-1. The cells 622-1, 622-2, and 622-3 of the DU #2 622 may be aggregated for a terminal 625-2. For example, among the cells 622-1, 622-2, and 622-3, the cell #2 622-2 may be configured as a serving cell for a terminal 625-3. Among the cells 622-1, 622-2, and 622-3, the cell #1 622-1 and the cell #m 622-3 may be configured as SCells for the terminal 625-2. The cells 623-1, 623-2, and 623-3 of the DU #n 623 may be aggregated for the terminal 625-3. For example, among the cells 623-1, 623-2, and 623-3, the cell #n 623-3 may be configured as a serving cell for the terminal 625-3. Among the cells 623-1, 623-2, and 623-3, the cell #1 623-1 and the cell #2 623-2 may be configured as SCells for the terminal 625-3.

In embodiments of the present disclosure, CA may be configured for the terminal 120 through a plurality of DUs. An operator may deploy DUs or DUs for multiple vendors across a plurality of sites according to a network environment and a holding status of carriers. Even if vendors are not the same, or even if sites are not the same, inter-DU CA may be supported.

Referring to the example 602, the cell #1 621-1 of the DU #1 621, the cell #1 622-1 of the DU #2 622, and the cell #2 623-2 of the DU #n 623 may be aggregated for the terminal 625-1. For example, among the cells 621-1, 622-1, and 623-2, the cell #1 621-1 of the DU #1 621 may be configured as a serving cell (or a PCell) for the terminal 625-1. For example, among the cells 621-1, 622-1, and 623-2, the cell #1 622-1 of the DU #2 622 and the cell #2 623-2 of the DU #n may be configured as SCells for the terminal 625-1. The cell #m 621-3 of the DU #1 621 and the cell #2 622-2 of the DU #2 622 may be aggregated for the terminal 625-2. For example, among the cells 621-3 and 622-2, the cell #m 621-3 of the DU #1 621 may be configured as a serving cell (or a PCell) for the terminal 625-2. For example, among the cells 621-3 and 622-2, the cell #2 622-2 of the DU #2 622 may be configured as an SCell for the terminal 625-2. The cell #2 621-2 of the DU #1 621, the cell #1 623-1 of the DU #n 623, and the cell #m 623-3 of the DU #n 623 may be aggregated for the terminal 625-3. For example, among the cells 621-2, 623-1, and 623-3, the cell #1 623-1 of the DU #n 623 may be configured as a serving cell (or a PCell) for the terminal 625-3. For example, among the cells 621-2, 623-1, and 623-3, the cell #2 621-2 of the DU #1 621 and the cell #m 623-3 of the DU #n 623 may be configured as SCells for the terminal 625-3.

FIG. 6B illustrates an example 630 of a protocol stack and an interface of the DUs 621 and 622 of FIG. 6A. Referring to the example 630, a protocol stack of the DU #1 621 may include a call processing block 631 (or an RRC processing module), an RLC 632 (or an RLC processing module), and a MAC 633 (or a MAC processing module). For example, the RLC 632 may include an RLC-H (high) and an RLC-L (low). A protocol stack of the DU #2 622 may include a call processing block 641 (or an RRC processing module), an RLC 642 (or an RLC processing module), and a MAC 643 (or a MAC processing module). For example, the RLC 642 may include an RLC-high (H) and an RLC-low (L). For example, the call processing blocks 631 and 641 may be configured to process an RRC message (or RRC configuration information). For example, the RRC message may be provided from a CU (e.g., the CU 610 of FIG. 6A). For example, the RLCs 632 and 642 may be configured to process functions of an RLC 423 and an RLC 473. For example, the MACs 633 and 643 may be configured to process functions of a MAC 422 and a MAC 472.

Referring to the example 630, in order to support CA between the DUs 621 and 622, an interface 645 between the DUs 621 and 622 may be defined. For example, the interface 645 may be defined for the MACs 633 and 643. However, the present disclosure is not limited thereto. Hereinafter, the interface 645 between the DUs is referred to as an X1 interface, but the interface 645 may be alternatively referred to as another term (e.g., D2, M1, F3, MV, or XD) having the same technical meaning. In a control plane, the interface 645 between the DUs 621 and 622 may be referred to as an X1-C interface. In a user plane, the interface 645 between the DUs 621 and 622 may be referred to as an X1-U interface. The X1-C interface may be used to share call control information between the DUs 621 and 622 and to be used for a setup procedure. The X1-U interface may be used for CA bearer transmission between the DUs 621 and 622, signaling between the MAC layers, and sharing of information.

Hereinafter, for convenience of description, the DU #1 621 may be referred to as a DU that provides a primary cell (PCell) among CA configured for a terminal (e.g., the terminal 120 of FIG. 1A and FIG. 1B). For example, the DU #1 621 may be referred to as a pDU or a first DU. The DU #2 622 may be referred to as a DU that provides a secondary cell (SCell) among the CA configured for the terminal (e.g., the terminal 120 of FIG. 1A and FIG. 1B). For example, the DU #2 622 may be referred to as an sDU or a second DU.

In order to configure inter-DU CA according to embodiments of the present disclosure, various parameters may be provided through an interface between DUs (e.g., the interface 645 of FIG. 6B). At least a portion of the parameters may be received from a CU (e.g., a CU 610 of FIG. 6A) or may be generated inside a DU.

A terminal (e.g., the terminal 120 of FIG. 1A and FIG. 1B or a terminal 625-1 of FIG. 6A) in which inter-DU CA is configured may perform an uplink transmission. For example, the uplink transmission may include a physical uplink shared channel (PUSCH) transmission. For example, the terminal may perform the uplink transmission to DUs that provide the inter-DU CA. At this time, in order to schedule the uplink transmission of the terminal, various parameters may be provided through the interface between the DUs. For example, the DUs may perform an exchange of uplink information through the interface between MACs. Examples of the various parameters described above may refer to the following table.

**[Table 3]**

| **Parameter** | **Description** |
|---|---|
| UE ID | unique ID information for one UE |
| SCell activation status | SCell activation status information for a corresponding UE |
| DRX status | DRX information for a corresponding UE |
| Beam status | beam report/determined beam information for a corresponding UE |
| BSR information | BSR information transmitted from a corresponding UE |
| distributed BSR information | buffer information to be used by a corresponding UE for a specific DU |
| PHR information | PHR information transmitted from a corresponding UE |
| distributed PHR information | power information that a corresponding UE may transmit for a specific DU |
| PUSCH resource allocation information | PUSCH resource allocation information for a corresponding UE |
| TA information | timing advance information for a corresponding UE |

According to embodiments, identification information (UE ID) of the terminal in which the CA is configured may be provided through the interface between the DUs. For example, in order to exchange the information between the MACs of the DUs, the identification information of the terminal may be used as a unique factor. Since multiple information exchanged between the MACs are configured (or defined) for each terminal, the identification information for identifying the terminal between the DUs may be required. The identification information for identifying the terminal may be generated based on a cell identifier (ID), a DU ID, a gNB ID, and an index of the terminal. For example, the cell ID, the DU ID, and the gNB ID may represent unique information of a base station. For example, the index of the terminal may include an identifier for identifying the terminal within a cell. For example, the index of the terminal may include a cell-radio network temporary identifier (C-RNTI). However, the present disclosure is not limited thereto. For example, the identification information of the terminal may include a mobile subscriber identity (MSI) of the terminal. For example, the identification information of the terminal may be negotiated between a DU (pDU) that provides a PCell and a DU (sDU) that provides an SCell within a call procedure of the inter-DU CA. For example, in a case that the PCell and the SCell are provided by different DUs, the pDU and the sDU may check the identification information of the terminal with each other during performing a procedure of configuring CA based on cells (the PCell and the SCell). Checking the identification information of the terminal may include matching (or mapping, corresponding) the identification information of the terminal in the pDU and the identification information of the terminal in the sDU.

According to embodiments, SCell activation status for the terminal may be provided through the interface between the DUs. In order to operate the inter-DU CA for the terminal, an addition and a release of CA may be required. For example, an operation for activation and deactivation of an SCell may be required in the MACs between the DUs. For example, the activation status may represent information indicating whether the SCell of the DU is in an activation state or in a deactivation state for the terminal. The activation status may be used to check whether to initiate or cease a CA operation for the terminal in the PCell and the SCell.

According to embodiments, buffer status report (BSR) information received from the terminal may be provided through the interface between the DUs. For example, the BSR information may include information on a BSR received from the terminal. For example, the terminal may provide a DU that provides a PCell or a DU that provides an SCell with information on the BSR. In order to schedule traffic (or a resource) of an uplink, the DUs may share the information on the BSR. For example, the scheduling may include allocation of the resource.

According to embodiments, split BSR information for the terminal may be provided through the interface between the DUs. For example, the split BSR information may be used to determine traffic to be scheduled by each of the DUs for the CA, among an amount of total uplink traffic required by the terminal. For example, the split BSR information may be determined (or generated, or identified) by the DU that provides the PCell or the DU that provides the SCell.

According to embodiments, power headroom report (PHR) information received from the terminal may be provided through the interface between the DUs. For example, the PHR information may include information on a PHR received from the terminal. For example, the terminal may provide the DU that provides the PCell or the DU that provides the SCell with information on the PHR. The PHR information may include a maximum power that is transmittable by the terminal in each carrier (or component carrier (CC), cells) and a power used for a current transmission (or a power level). In order to perform uplink scheduling such that transmission power for the uplink of the terminal does not exceed the maximum power, the DUs may share the information on the PHR.

According to embodiments, split PHR information for the terminal may be provided through the interface between the DUs. For example, the split PHR information may be used to determine an uplink transmission power to be scheduled by each of the DUs for the CA, in order to perform scheduling such that the maximum power that is transmittable by the terminal is not exceeded. For example, the split PHR information may be determined (or generated, or identified) by the DU that provides the PCell or the DU that provides the SCell.

According to embodiments, PUSCH resource allocation information for the terminal may be provided through the interface between the DUs. For example, the PUSCH resource allocation information may include information on an uplink resource scheduled for the terminal in each of the DUs for the inter-DU CA. For example, the PUSCH resource allocation information may be used to check information on the scheduled uplink resource between the DUs. The PUSCH resource allocation information may be used to identify uplink control information (UCI), whether PUSCH is transmitted, or an amount of a resource required by the terminal, and to perform scheduling. For example, the PUSCH resource allocation information may include a modulation and coding scheme (MCS), a waveform, a rank, and a transport block size (TBS) of the terminal.

According to embodiments, timing advance (TA) information between the terminal and the SCell may be provided through the interface between DUs. For example, the TA information may be used to check a time difference of uplink synchronization between the terminal and the SCell.

According to embodiments, discontinuous reception (DRX) information of the terminal may be provided through the interface between the DUs. For example, the DRX information may be used to perform uplink scheduling in the PCell and the SCell by considering a DRX state of the terminal. For example, the DRX information may be exchanged between the DU that provides the PCell and the DU that provides the SCell.

According to embodiments, beam information of the terminal may be provided through the interface between the DUs. For example, the beam information may include a beam report received from the terminal for the PCell or the SCell and determined beam information. For example, independent beam information (or beam status) may be configured in the PCell and the SCell. Through an exchange of the beam information, the DU that provides the PCell and the DU that provides the SCell may perform scheduling.

The parameters for the inter-DU CA according to embodiments of the present disclosure are illustrative, and the table is not used to interpret embodiments of the present disclosure in a limiting manner. For example, a portion of the parameters may not be used in the interface between the DUs. For example, the portion of the parameters may be internally configured within the DU. For example, the portion of the parameters may have a fixed value.

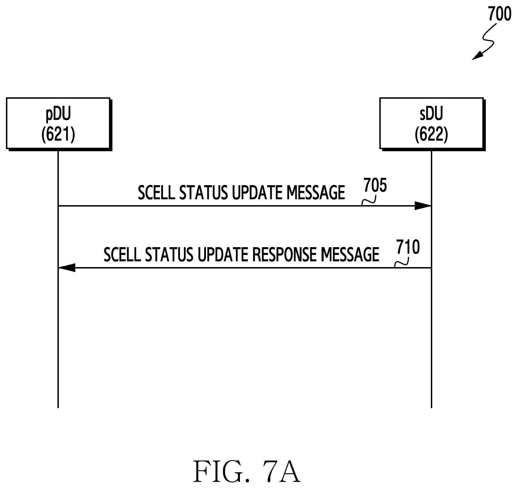

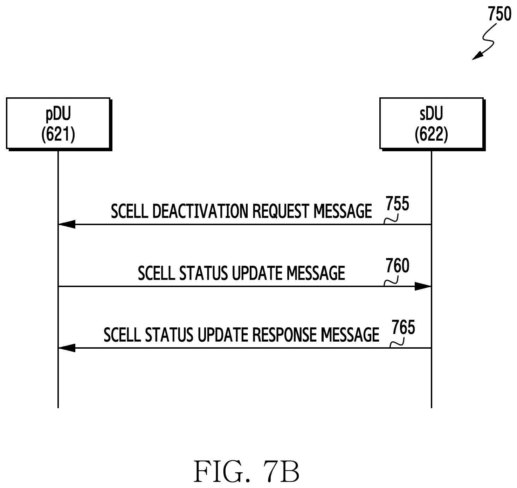

FIG. 7A and FIG. 7B illustrate examples of a secondary cell (SCell) status management procedure for CA between DUs.

A pDU 621 of FIG. 7A and FIG. 7B may be an example of the DU #1 621 of FIG. 6A. An sDU 622 of FIG. 7A and FIG. 7B may be an example of the DU #2 622 of FIG. 6A. For example, the pDU 621 and the sDU 622 may provide inter-DU CA for a terminal (e.g., the terminal 120 of FIG. 1A and FIG. 1B or the terminal 625-1 of FIG. 6A). For example, the pDU 621 may provide a PCell of the inter-DU CA for the terminal. The pDU 621 may be referred to as a PCell gNB-DU or a first DU. For example, the sDU 622 may provide an SCell of the inter-DU CA for the terminal. The sDU 622 may be referred to as an SCell gNB-DU or a second DU. Each of the pDU 621 and the sDU 622 may include at least a portion of the components of the electronic device 500 of FIG. 5.

An example 700 of FIG. 7A may represent an example of the SCell status management procedure by the PCell. For example, the SCell status management procedure may be used to activate or deactivate the SCell.

Referring to the example 700, in operation 705, the pDU 621 may transmit an SCell status update message to the sDU 622. For example, the pDU 621 may transmit the SCell status update message to the sDU 622 through an interface (e.g., the interface 645 of FIG. 6A) between DUs. For example, the SCell status update message may include information (or an information element (IE)) indicating a state of the SCell. An example of information included in the SCell status update message may refer to the table below.

**[Table 4]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell list | M | | | | | |
| >> Serving cell index | M | | | | | |
| >> SCell state | M | | ENUMERATED (DEACTIVATED , ACTIVATED, PREEMPTION OVERHEAT) | | | |
| >> Reserved | M | | | | | |

Referring to the above-described table, the 'M' of the table may represent mandatory information. However, an embodiment of the present disclosure is not limited thereto. For example, in the table, IEs configured as the 'M' are merely exemplary. For example, an IE configured as the mandatory information 'M' may also be configured as optional information 'O'. For example, the UE list may include one or more terminals for which the inter-DU CA (hereinafter, CA) is configured (or is to be configured). For example, the UE ID may include identification information of the terminal for distinguishing the terminal between the DUs 621 and 622 for the CA. For example, the Serving cell list may include one or more SCells which are targets for updating a state. For example, the Serving cell index may include an index of the SCell of the CA of the terminal indicated by the UE ID.

For example, the SCell state may include a state of the SCell indicated by the index of the SCell. For example, the state may include a deactivation state, an activation state, or a PREEMPTION OVERHEAT state. For example, in a case that the SCell state indicates "deactivated", the state may be the deactivation state. For example, in a case that the SCell state indicates "activated", the state may be the activation state. For example, in a case that the SCell state indicates "PREEMPTION OVERHEAT", the state may be the PREEMPTION OVERHEAT state. The PREEMPTION OVERHEAT state may be included in the deactivation state. For example, the PREEMPTION OVERHEAT state may include a state in which the SCell is deactivated due to an abnormal operation (e.g., an abnormal operation due to overheating) of the terminal.

For example, the Reserved may represent information reserved to provide designated information between the DUs. In the table, the Reserved is exemplified as being included in the SCell status update message as the mandatory information 'M', however, the present disclosure is not limited thereto. For example, the Reserved may be the optional information 'O'.

In operation 710, the pDU 621 may receive an SCell status update response message from the sDU 622. For example, the pDU 621 may receive the SCell status update response message from the sDU 622 through the interface (e.g., the interface 645 of FIG. 6A) between DUs. For example, the SCell status update response message may be transmitted in response to the SCell status update message. For example, the SCell status update response message may include information (or an information element (IE)) indicating completion of an update for the state of the SCell. An example of information included in the SCell status update response message may refer to the table below.

**[Table 5]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell list | M | | | | | |
| >> Serving cell index | M | | | | | |
| >> Reserved | M | | | | | |

Referring to the above-described table, the 'M' of the table may represent mandatory information. However, an embodiment of the present disclosure is not limited thereto. For example, in the table, IEs configured as the 'M' are merely exemplary. For example, an IE configured as the mandatory information 'M' may also be configured as optional information 'O'. For example, the UE list may include one or more terminals for which the inter-DU CA (hereinafter, CA) is configured (or is to be configured). For example, the UE ID may include identification information of the terminal for distinguishing the terminal between the DUs 621 and 622 for the CA. For example, the Serving cell list may include one or more SCells which are targets for which the update of the state is completed. For example, the Serving cell index may include an index of the SCell of the CA of the terminal indicated by the UE ID. For example, the Reserved may represent information reserved to provide designated information between the DUs. In the table, the Reserved is exemplified as being included in the SCell status update message as the mandatory information 'M', however, the present disclosure is not limited thereto. For example, the Reserved may be the optional information 'O'.

Referring to the above, the pDU 621 may confirm a state of the updated SCell by receiving the SCell status update response message.

An example 750 of FIG. 7B may represent an example of an SCell deactivation state management procedure by the SCell. For example, the SCell deactivation state management procedure may be used to deactivate the SCell according to a request for the SCell by the sDU 622.

Referring to an example 750, in operation 755, the pDU 621 may receive an SCell deactivation request message. For example, the pDU 621 may receive the SCell deactivation request message transmitted from the sDU 622 through the interface (e.g., the interface 645 of FIG. 6A) between the DUs. For example, the sDU 622 may determine (or judge) to deactivate a state of the SCell among one or more cells of the sDU 622, and may transmit the SCell deactivation request message to the pDU 621. The SCell deactivation request message may include information (or an information element (IE)) for requesting deactivation of the SCell. An example of information included in the SCell deactivation request message may refer to the table below.

**[Table 6]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell list | M | | | | | |
| >> Serving cell index | M | | | | | |
| >> Reserved | M | | | | | |

Referring to the above-described table, the 'M' of the table may represent mandatory information. However, an embodiment of the present disclosure is not limited thereto. For example, in the table, IEs configured as the 'M' are merely exemplary. For example, an IE configured as the mandatory information 'M' may also be configured as optional information 'O'. For example, the UE list may include one or more terminals for which the inter-DU CA (hereinafter, CA) is configured (or is to be configured). For example, the UE ID may include identification information of the terminal for distinguishing the terminal between the DUs 621 and 622 for the CA. For example, the Serving cell list may include one or more SCells which are targets for requesting the deactivation. For example, the Serving cell index may include an index of the SCell of the CA of the terminal indicated by the UE ID. For example, the Reserved may represent information reserved to provide designated information between the DUs. In the table, the Reserved is exemplified as being included in the SCell status update message as the mandatory information 'M', however, the present disclosure is not limited thereto. For example, the Reserved may be the optional information 'O'.

In operation 760, the pDU 621 may transmit an SCell status update message to the sDU 622. For example, the pDU 621 may transmit the SCell status update message to the sDU 622 through the interface (e.g., the interface 645 of FIG. 6A) between the DUs. For example, the SCell status update message may include information (or an information element (IE)) indicating a state of the SCell. An example of information included in the SCell status update message may refer to the above-described Table 4 below. For example, the SCell status update message transmitted from the pDU 621 to the sDU 622 in the operation 760 may include information for indicating deactivation of the SCell indicated by the SCell deactivation request message received in the operation 755. For example, the Serving cell index exemplified in the Table 4 may represent an index of the SCell indicated by the SCell deactivation request message, and the SCell state may indicate a value of 'deactivated'.

In operation 765, the pDU 621 may receive an SCell status update response message from the sDU 622. For example, the pDU 621 may receive the SCell status update response message from the sDU 622 through the interface (e.g., the interface 645 of FIG. 6A) between the DUs. For example, the SCell status update response message may be transmitted in response to the SCell status update message. For example, the SCell status update response message may include information (or an information element (IE)) indicating completion of an update for the state of the SCell. An example of information included in the SCell status update response message may refer to the above-described Table 5 below. For example, the SCell status update response message transmitted from the sDU 622 to the pDU 621 in the operation 765 may indicate that the state of the SCell is changed to a deactivation state. Accordingly, the pDU 621 may confirm that the SCell is changed to the deactivation state.

A name of a message exemplified in FIG. 7A and FIG. 7B are merely for convenience of description, and the present disclosure is not limited thereto. For example, a name of information exchanged between the DUs for providing the inter-DU CA and a name of a message including the information thereof may be changed. In addition, for example, a portion of the information (or IE) included in the message may be omitted or another configuration may be added.

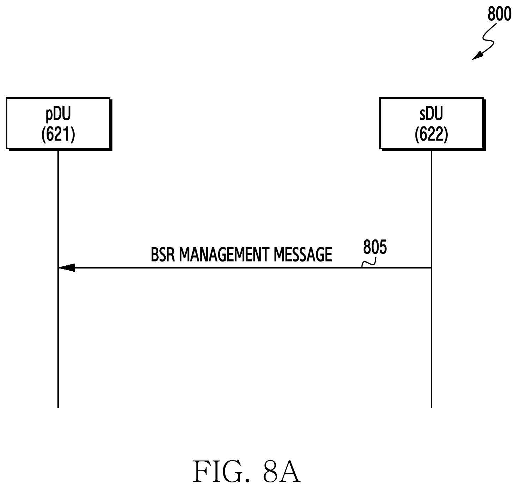

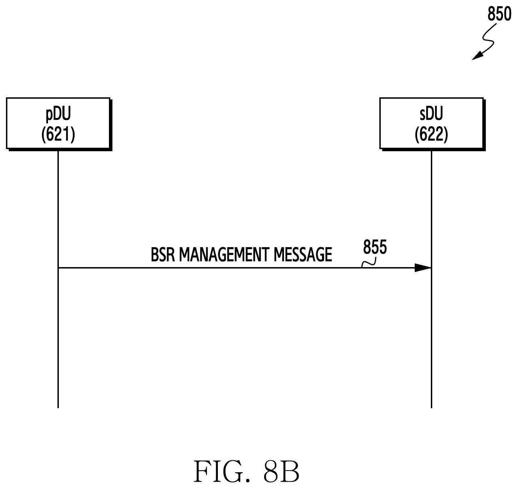

FIG. 8A and FIG. 8B illustrate examples of a buffer status report (BSR) management procedure for CA between DUs.

A pDU 621 of FIG. 8A and FIG. 8B may be an example of the DU #1 621 of FIG. 6A. An sDU 622 of FIG. 8A and FIG. 8B may be an example of the DU #2 622 of FIG. 6A. For example, the pDU 621 and the sDU 622 may provide inter-DU CA for a terminal (e.g., the terminal 120 of FIG. 1A and FIG. 1B or the terminal 625-1 of FIG. 6A). For example, the pDU 621 may provide a PCell of the inter-DU CA for the terminal. The pDU 621 may be referred to as a PCell gNB-DU or a first DU. For example, the sDU 622 may provide an SCell of the inter-DU CA for the terminal. The sDU 622 may be referred to as an SCell gNB-DU or a second DU. Each of the pDU 621 and the sDU 622 may include at least a portion of the components of the electronic device 500 of FIG. 5.

An example 800 of FIG. 8A may represent an example of the BSR management procedure. For example, the BSR management procedure may be used to recognize an amount of data buffered to the terminal (or a UE side) in the pDU 621 and the sDU 622.

Referring to the example 800, in operation 805, the pDU 621 may receive a BSR management message. For example, the pDU 621 may receive the BSR management message from the sDU 622 through an interface (e.g., the interface 645 of FIG. 6A) between DUs. For example, the sDU 622 may obtain information on a BSR from the terminal. For example, the sDU 622 may receive the information on the BSR from the terminal through an uplink transmission (e.g., a PUSCH transmission) on the SCell provided by the sDU 622. For example, the sDU 622 may generate the BSR management message based on the received information on the BSR, and may transmit the generated BSR management message to the pDU 621.

For example, the information on the BSR may include information on a buffer of the terminal. For example, the BSR may be included in a medium access control (MAC) control element (CE). For example, the MAC CE may include a MAC header having an index. For example, the MAC CE may have a value of a logical channel (LC) ID according to the index of the MAC header. The LC ID value may indicate a type of the MAC CE. For example, the type may indicate the BSR. Detailed content on the information (or the BSR) on the BSR transmitted from the terminal may refer to content of TS 38.321 or TS 36.321.

For example, the BSR management message may include the information (or an information element (IE)) on the BSR. An example of the information included in the BSR management message may refer to the table below.

**[Table 7]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell list | M | | | | | |
| >> Serving cell index | M | | | | | |
| >> BSR Tx System Time | M | | | | | |
| >> BSR Type | M | | ENUMERATED (SHORT, SHORTTRUNC ATED, LONG, LONG TRUNCATED) | | | |
| >> LCG ID bitmap | M | | | | | |
| >> LongBSR | M | | | | | |
| >>> LCG ID list | M | | | | | |
| >>>> LCG ID | M | | | | | |
| >>>> BSR | M | | | | | |
| >> ShortBSR | M | | | | | |
| >>> BSR | M | | | | | |

Referring to the above-described table, the 'M' of the table may represent mandatory information. However, an embodiment of the present disclosure is not limited thereto. For example, in the table, IEs configured as the 'M' are merely exemplary. For example, an IE configured as the mandatory information 'M' may also be configured as optional information 'O'. For example, the UE list may include one or more terminals for which the inter-DU CA (hereinafter, CA) is configured (or is to be configured). For example, the UE ID may include identification information of the terminal for distinguishing the terminal between the DUs 621 and 622 for the CA. For example, the Serving cell list may include one or more SCells which provide information on the BSR of the terminal indicated by the UE ID. For example, the Serving cell index may include an index of the SCell of the CA configured for the terminal indicated by the UE ID.

For example, the BSR Tx system Time may represent a time when the BSR is received from the terminal indicated by the UE ID. For example, the time when the BSR is received may represent time information when the BSR is received by the SCell (or the sDU 622). For example, the BSR Type may indicate a type of the BSR. For example, the type of the BSR may include 'SHORT', 'SHORTTRUNCATED', 'LONG', and 'LONGTRUNCATED'. For example, in a case that the type indicates 'SHORT', the BSR may be a Short BSR. For example, in a case that the type indicates 'SHORTTRUNCATED', the BSR may be a Short truncated BSR. For example, in a case that the type indicates 'LONG', the BSR may be a Long BSR. For example, in a case that the type indicates 'LONGTRUNCATED', the BSR may be a Long truncated BSR.

For example, the LCG ID bitmap may represent a bitmap for indicating a logical channel group (LCG) ID in the BSR. For example, according to a value of the bitmap, the LCG ID included in the BSR may be indicated.

For example, the LongBSR may represent information for indicating a buffer size per LCG ID in a case that the BSR Type indicates 'LONG' or 'LONGTRUNCATED'. For example, the LCG ID list, which is a lower IE of the LongBSR, may indicate one or more LCG IDs in the BSR which is the Long BSR. For example, the LCG ID, which is a lower IE of the LongBSR, may indicate one LCG ID among the one or more LCG IDs of the LCG ID list. For example, the BSR, which is the lower IE of the LongBSR, may represent a buffer size corresponding to the LCG ID.

For example, the ShortBSR may represent information for indicating a buffer size of the BSR, which is a Short BSR, in a case that the BSR Type indicates 'SHORT' or 'SHORTTRUNCATED'. For example, the BSR, which is a lower IE of the ShortBSR, may represent a buffer size of the Short BSR corresponding to the LCG ID bitmap.

For example, the pDU 621 may recognize an amount of data buffered to the terminal based on the BSR management message received from the sDU 622. In the example 800 of FIG. 8A, an example in which the sDU 622 shares the information on the BSR with the pDU 621 as the terminal provides the information on the BSR to the sDU 622 is illustrated, however, the present disclosure is not limited thereto.

An example 850 of FIG. 8B may represent an example of the BSR management procedure. For example, the BSR management procedure may be used to recognize an amount of data buffered to the terminal (or a UE side) in the pDU 621 and the sDU 622.

Referring to an example 850, in operation 855, the pDU 621 may transmit a BSR management message. For example, the pDU 621 may transmit the BSR management message to the sDU 622 through the interface (e.g., the interface 645 of FIG. 6A) between the DUs. For example, the pDU 621 may obtain information on a BSR from the terminal. For example, the pDU 621 may obtain the information on the BSR of the terminal from a radio unit (RU) related to a PCell of CA configured for the terminal. For example, the RU may receive the information on the BSR from the terminal through an uplink transmission (e.g., a PUSCH transmission) on the PCell provided by the pDU 621. For example, the pDU 621 may generate the BSR management message based on the received information on the BSR, and may transmit the generated BSR management message to the sDU 622.

For example, the information on the BSR may include information on a buffer of the terminal. For example, the BSR may be included in a medium access control (MAC) control element (CE). For example, the MAC CE may include a MAC header having an index. For example, the MAC CE may have a value of a logical channel (LC) ID according to the index of the MAC header. The LC ID value may indicate a type of the MAC CE. For example, the type may indicate the BSR.

For example, the BSR management message may include information (or an information element (IE)) on the BSR. An example of the information included in the BSR management message may refer to the Table 7. For example, the Serving cell list included in the BSR management message transmitted from the pDU 621 to the sDU 622 may include one or more PCells which provide the information on the BSR of the terminal indicated by the UE ID. For example, the Serving cell index may include an index of the PCell of the CA configured for the terminal indicated by the UE ID. Detailed content on the IE included in the BSR management message transmitted from the pDU 621 to the sDU 622 may refer to the Table 7 of FIG. 8A.

For example, the sDU 622 may recognize the amount of the data buffered to the terminal based on the BSR management message received from the pDU 621.

Referring to FIG. 8A and FIG. 8B, the terminal may transmit the information on the BSR of the terminal to the pDU 621 or the sDU 622. At this time, the pDU 621 or the sDU 622 obtaining the information on the BSR may recognize (or share, exchange) the amount of the data buffered to the terminal through the BSR management message. In FIG. 8A and FIG. 8B, the inter-DU CA configured by the pDU 621 and one sDU 622 is exemplified, but an embodiment of the present disclosure is not limited thereto. For example, inter-DU CA may be configured by the pDU 621 and a plurality of sDUs. For example, the sDU 622 of FIG. 8A may transmit the BSR management message to another sDU other than the pDU 621. In addition, for example, the pDU 621 of FIG. 8B may transmit the BSR management message to another sDU other than the sDU 622.

Referring to FIG. 8A and FIG. 8B, in a case that the pDU 621 among the DUs for providing the inter-DU CA is a DU (or a split entity) that splits the buffer, the sDU 622 (or a gNB-DU of the SCell) may transmit the BSR management message to the pDU 621 (or a gNB-DU of the PCell). At this time, an operation in which the pDU 621 (or the gNB-DU of the PCell) transmits the BSR management message to the sDU 622 (or the gNB-DU of the SCell) may be optionally performed. In addition, an operation in which the sDU 622 (or the gNB-DU of the SCell) transmits the BSR management message to another sDU (or a gNB-DU of an SCell) may be optionally performed.

A name of a message exemplified in FIG. 8A and FIG. 8B is merely for convenience of description, and the present disclosure is not limited thereto. For example, a name of information exchanged between the DUs for providing the inter-DU CA and a name of a message including the information thereof may be changed. In addition, for example, a portion of the information (or IE) included in the message may be omitted or another configuration may be added.

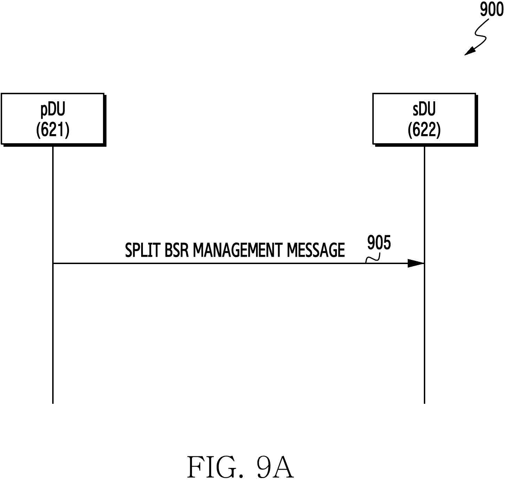

FIG. 9A to FIG. 9C illustrate examples of a split BSR management procedure for CA between DUs.

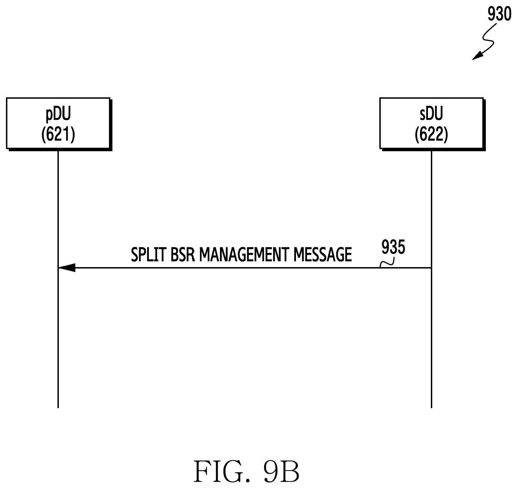

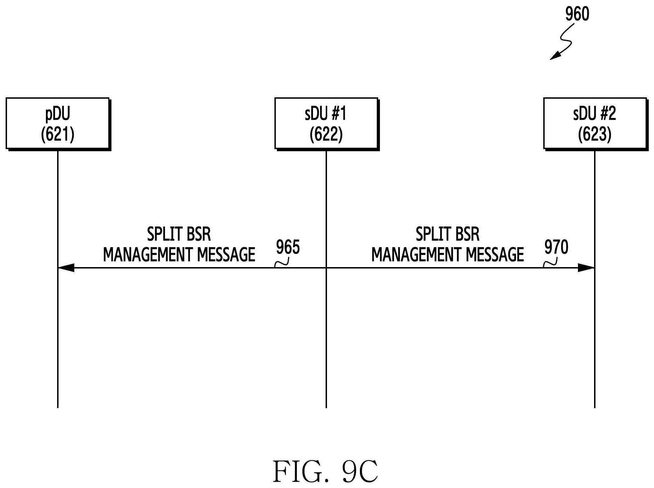

A pDU 621 of FIG. 9A, FIG. 9B, and FIG. 9C may be an example of the DU #1 621 of FIG. 6A. An sDU 622 of FIG. 9A, FIG. 9B, and FIG. 9C may be an example of the DU #2 622 of FIG. 6A. An sDU 623 of FIG. 9C may be an example of the DU #n 623 of FIG. 6A. For example, the pDU 621, the sDU 622, and the sDU 623 may provide inter-DU CA for a terminal (e.g., the terminal 120 of FIG. 1A and FIG. 1B or the terminal 625-1 of FIG. 6A). For example, the pDU 621 may provide a PCell of the inter-DU CA for the terminal. The pDU 621 may be referred to as a PCell gNB-DU or a first DU. For example, the sDU 622 may provide an SCell of the inter-DU CA for the terminal. For example, the sDU 623 may provide an SCell of the inter-DU CA for the terminal. The sDU 622 (or the sDU 623) may be referred to as an SCell gNB-DU or a second DU. Each of the pDU 621, the sDU 622, and the sDU 623 may include at least a portion of the components of the electronic device 500 of FIG. 5.

An example 900 of FIG. 9A may represent an example of the split BSR management procedure. For example, the split BSR management procedure may be used to split (or distribute, segment) a buffer based on a BSR of the terminal in the inter-DU CA and to provide split BSR information to the DUs for providing the inter-DU CA. In the example 900 of FIG. 9A, a case that the pDU 621 among the DUs for providing the inter-DU CA is a DU (or a split entity) that splits the buffer is exemplified. However, the present disclosure is not limited thereto.

Referring to the example 900, in operation 905, the pDU 621 may transmit a split BSR management message. For example, the pDU 621 may transmit the split BSR management message to the sDU 622 through an interface (e.g., the interface 645 of FIG. 6A) between the DUs. For example, the split BSR management message may be used for uplink scheduling for the terminal of the sDU 622.

For example, the pDU 621 may determine SCell uplink scheduling based on obtained information on the BSR of the terminal. For example, the pDU 621 may split a buffer that the terminal may use according to an amount of data to be scheduled in the SCell based on the information on the BSR. For example, the pDU 621 may determine a split buffer occupancy (BO) to be used by the sDU 622. For example, the information on the BSR may be obtained directly from the terminal or may be obtained by the BSR management message received from the sDU 622.

For example, the split BSR management message may include information (or an information element (IE)) on the buffer split for the terminal. An example of the information included in the split BSR management message may refer to the following table.

**[Table 8]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell list | M | | | | | |
| >> Serving cell index | M | | | | | |
| >> BSR Tx System Time | M | | | | | |
| >>> LCG ID list | M | | | | | |
| >>>> LCG ID | M | | | | | |
| >>>> Split BO | M | | | | | |
| >> SCell schedule allow | O | | | | | |

Referring to the above-described table, the 'M' of the table may represent mandatory information, and the 'O' may represent optional information. However, the present disclosure is not limited thereto. For example, in the table, IEs configured as the 'M' and the 'O' are merely exemplary. For example, an IE configured as the mandatory information 'M' may also be configured as the optional information 'O'. For example, the UE list may include one or more terminals for which the inter-DU CA (hereinafter, CA) is configured (or to be configured). For example, the UE ID may include identification information of the terminal for distinguishing the terminal between the DUs 621 and 622 for the CA. For example, the Serving cell list may include one or more PCells for providing information on the split buffer. For example, the Serving cell index may include an index of the PCell of the CA configured for the terminal indicated by the UE ID.

For example, the BSR Tx system Time may represent a time when the BSR is received from the terminal indicated by the UE ID. For example, the LCG ID list may indicate one or more LCG IDs in the BSR received from the terminal. For example, the Split BO may indicate an amount of a split BO for the LCG ID. In the example 900, the Split BO may include information of a buffer to be scheduled (or to be serviced) by the sDU 622. However, the present disclosure is not limited thereto. For example, the Split BO may include information of a buffer to be scheduled (or to be serviced) by the pDU 621. Alternatively, for example, the Split BO may include the information of the buffer to be scheduled (or to be serviced) by the sDU 622 and the information of the buffer to be scheduled (or to be serviced) by the pDU 621.

For example, the SCell schedule allow may indicate whether scheduling in the SCell is allowed. For example, in a case that the SCell schedule allow indicates able, the sDU 622 may perform uplink scheduling for the terminal. In contrast, in a case that the SCell schedule allow indicates disable, the sDU 622 may be incapable of performing the uplink scheduling for the terminal. For example, the incapability of performing the uplink scheduling may be understood as refraining from (or omitting) the uplink scheduling. In the example 900, the SCell schedule allow included in the split BSR management message transmitted by the pDU 621 to the sDU 622 may be included in the split BSR management message as the pDU 621 detects whether scheduling for the SCell of the sDU 622 is able to be performed. In other words, the pDU 621 may determine a scheduling capability of the sDU 622, and a value of the SCell schedule allow may be determined according thereto. However, the present disclosure is not limited thereto.

In the example 900 of FIG. 9A, the pDU 621, which is a split entity, may transmit the split BSR management message to the sDU 622 for providing the inter-DU CA. Thereafter, the sDU 622 may perform uplink scheduling for the terminal by using the split BSR management message. The terminal may transmit an uplink transmission (e.g., a PUSCH) to the sDU 622 according to a scheduled resource. At this time, the terminal may perform the uplink transmission to the pDU 621 according to the inter-DU CA.

An example 930 of FIG. 9B may represent an example of the split BSR management procedure. For example, the split BSR management procedure may be used to split (or distribute, segment) a buffer based on the BSR of the terminal in the inter-DU CA, and to provide split BSR information to the DUs for providing the inter-DU CA. In the example 930 of FIG. 9B, a case in which the sDU 622 among the DUs for providing the inter-DU CA is a DU (or a split entity) that splits the buffer is illustrated. However, the present disclosure is not limited thereto.

Referring to the example 930, in operation 935, the pDU 621 may receive a split BSR management message. For example, the sDU 622 may transmit the split BSR management message to the pDU 621 through the interface (e.g., the interface 645 of FIG. 6A) between the DUs. For example, the split BSR management message may be used for uplink scheduling for the terminal of the pDU 621.

For example, the sDU 622 may determine PCell uplink scheduling based on obtained information on the BSR of the terminal. For example, the pDU 621 may split a buffer that may be used by the terminal according to an amount of data to be scheduled in the PCell, based on the information on the BSR. For example, the sDU 622 may determine a split buffer occupancy (BO) to be used by the pDU 621. For example, the information on the BSR may be obtained directly from the terminal, or may be obtained by the BSR management message received from the pDU 621.

For example, the split BSR management message may include information (or an information element (IE)) on the buffer split for the terminal. An example of the information included in the split BSR management message may refer to the Table 8. For example, the Serving cell list included in the split BSR management message transmitted from the sDU 622 to the pDU 621 may include one or more SCells that provide information on the split buffer. For example, the Serving cell index in the split BSR management message transmitted from the sDU 622 to the pDU 621 may include an index of the SCell of the CA configured for the terminal indicated by the UE ID. For example, the Split BO included in the split BSR management message transmitted from the sDU 622 to the pDU 621 may indicate an amount of a split BO for the LCG ID. In the example 930, the Split BO may include information of a buffer to be scheduled (or to be serviced) by the pDU 621. However, the present disclosure is not limited thereto. For example, the Split BO may include information of a buffer to be scheduled (or to be serviced) by the sDU 622. Alternatively, for example, the Split BO may include the information of the buffer to be scheduled (or to be serviced) by the sDU 622 and the information of the buffer to be scheduled (or to be serviced) by the pDU 621.

For example, the SCell schedule allow included in the split BSR management message transmitted from the sDU 622 to the pDU 621 may indicate whether scheduling in the SCell is allowed. For example, in a case that the SCell schedule allow indicates able, the sDU 622 may perform uplink scheduling for the terminal. In contrast, in a case that the SCell schedule allow indicates disable, the sDU 622 may be incapable of performing the uplink scheduling for the terminal. In the example 930, the SCell schedule allow included in the split BSR management message transmitted by the sDU 622 to the pDU 621 may be included in the split BSR management message as the sDU 622 detects whether scheduling for the SCell is possible. In other words, the sDU 622 may directly determine a scheduling capability for the SCell, and a value of the SCell schedule allow may be determined accordingly.

In the example 930 of FIG. 9B, the sDU 622, which is a split entity, may transmit the split BSR management message to the pDU 621 for providing the inter-DU CA. Thereafter, the pDU 621 may perform uplink scheduling for the terminal by using the split BSR management message. The terminal may transmit an uplink transmission (e.g., a PUSCH) to the pDU 621 according to a scheduled resource. At this time, the terminal may perform the uplink transmission to the sDU 622 according to the inter-DU CA.

An example 960 of FIG. 9C may represent an example of the split BSR management procedure. For example, the split BSR management procedure may be used to split (or distribute, segment) a buffer based on the BSR of the terminal in the inter-DU CA, and to provide split BSR information to the DUs for providing the inter-DU CA. In an example 960 of FIG. 9C, a case in which the sDU 622 among the DUs for providing the inter-DU CA is a DU (or a split entity) that splits the buffer is illustrated. At this time, the DUs may further include the pDU 621 and the sDU 623.

Referring to the example 960, in operation 965, the pDU 621 may receive a split BSR management message. For example, the sDU 622 (e.g., an sDU #1) may transmit the split BSR management message to the pDU 621 through the interface (e.g., the interface 645 of FIG. 6A) between the DUs. For example, the split BSR management message may be used for uplink scheduling for the terminal of the pDU 621. In addition, in operation 970, the sDU 623 (e.g., an sDU #2) may receive the split BSR management message. For example, the sDU 622 may transmit the split BSR management message to the sDU 623 through the interface (e.g., the interface 645 of FIG. 6A) between the DUs. For example, the split BSR management message may be used for uplink scheduling for the terminal of the sDU 623. Detailed content of the split BSR management message transmitted from the sDU 622 to each of the pDU 621 and the sDU 623 may refer to the Table 8.

In the example 960 of FIG. 9C, the sDU 622, which is a split entity, may transmit the split BSR management message to each of the pDU 621 and the sDU 623 for providing the inter-DU CA. Thereafter, the pDU 621 and the sDU 623 may perform the uplink scheduling for the terminal by using the split BSR management message. In FIG. 9C, an example in which the sDU 622 is a split entity is illustrated, but the present disclosure is not limited thereto. For example, the pDU 621 may be a split entity, and the pDU 621 may transmit the split BSR management message to each of sDUs 622 and 623 for providing the inter-DU CA.

Referring to FIG. 9A to FIG. 9C, in a case that the pDU 621 among the DUs for providing the inter-DU CA is the DU that splits the buffer (or the split entity), the pDU 621 (or a gNB-DU of the PCell) may transmit the split BSR management message to the sDU 622 (or a gNB-DU of the SCell). At this time, an operation in which the sDU 622 (or the gNB-DU of the SCell) transmits the split BSR management message to the pDU 621 (or the gNB-DU of the PCell) may be optionally performed. In addition, an operation in which the sDU 622 (or the gNB-DU of the SCell) transmits the split BSR management message to another sDU (or a gNB-DU of an SCell) may be optionally performed.

A name of a message illustrated in FIG. 9A to FIG. 9C is merely for convenience of description, and the present disclosure is not limited thereto. For example, a name of information exchanged between the DUs for providing the inter-DU CA and a name of a message including the information thereof may be changed. In addition, for example, a portion of the information (or IE) included in the message may be omitted or another configuration may be added.

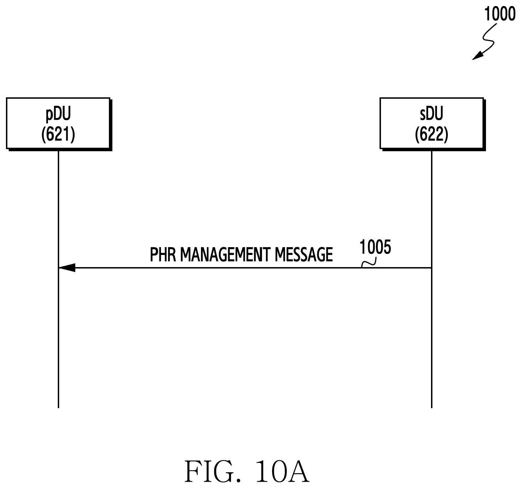

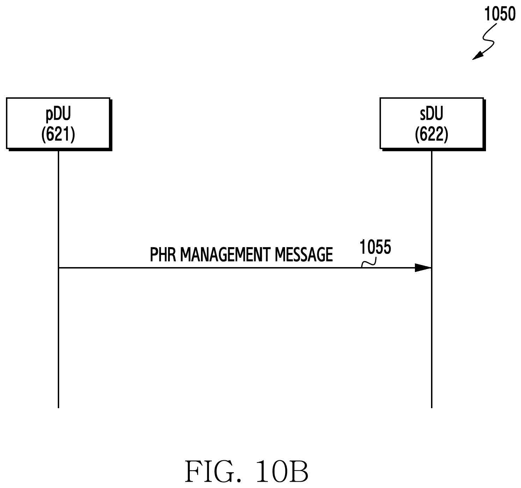

FIG. 10A and FIG. 10B illustrate examples of a power headroom report (PHR) management procedure for CA between DUs.

A pDU 621 of FIG. 10A and FIG. 10B may be an example of the DU #1 621 of FIG. 6A. An sDU 622 of FIG. 10A and FIG. 10B may be an example of the DU #2 622 of FIG. 6A. For example, the pDU 621 and the sDU 622 may provide inter-DU CA for a terminal (e.g., the terminal 120 of FIG. 1A and FIG. 1B or the terminal 625-1 of FIG. 6A). For example, the pDU 621 may provide a PCell of the inter-DU CA for the terminal. The pDU 621 may be referred to as a PCell gNB-DU or a first DU. For example, the sDU 622 may provide an SCell of the inter-DU CA for the terminal. The sDU 622 may be referred to as an SCell gNB-DU or a second DU. Each of the pDU 621 and the sDU 622 may include at least a portion of the components of the electronic device 500 of FIG. 5.

An example 1000 of FIG. 10A may represent an example of the PHR management procedure. For example, the PHR management procedure may be used to recognize an amount of a power available at the terminal (or a UE side) in the pDU 621 and the sDU 622.

Referring to the example 1000, in operation 1005, the pDU 621 may receive a PHR management message. For example, the pDU 621 may receive the PHR management message from the sDU 622 through an interface (e.g., the interface 645 of FIG. 6A) between the DUs. For example, the sDU 622 may obtain information on a PHR from the terminal. For example, the sDU 622 may receive the information on the PHR from the terminal through an uplink transmission (e.g., a PUSCH transmission) on the SCell provided by the sDU 622. For example, the sDU 622 may generate the PHR management message based on the received information on the PHR, and may transmit the generated PHR management message to the pDU 621.

For example, the information on the PHR may include information on a transmission power that may be used during the uplink transmission at the terminal. For example, the PHR may be included in a medium access control (MAC) control element (CE). For example, the MAC CE may include a MAC header having an index. Detailed content of the information (or the PHR) on the PHR transmitted from the terminal may refer to content of TS 38.321 or TS 36.321.

For example, the PHR management message may include the information (or an information element (IE)) on the PHR. An example of the information included in the PHR management message may refer to the following table.

**[Table 9]**

| **IE/Group Name** | **Presence** | **Rang** | **IE type and reference** | **Semantics description** | **Criticality** | **Assigned Criticality** |
|---|---|---|---|---|---|---|
| UE list | M | | | | | |
| > UE ID | M | | | | | |
| > Serving cell list | M | | | | | |
| >> Serving cell index | M | | | | | |
| >> PHR Tx System Time | M | | | | | |
| >> PHR Type | M | | ENUMERATED (SINGLE, MULTIPLE) | | | |
| >> PHR MAC CE SIZE | M | | | | | |
| >> PHR MAC CE | M | | | | | |

Referring to the above-described table, the 'M' in the table may represent mandatory information. However, an embodiment of the present disclosure is not limited thereto. For example, in the table, IEs configured as the 'M' are merely exemplary. For example, an IE configured as the mandatory information 'M' may also be configured as optional information 'O'. For example, the UE list may include one or more terminals for which the inter-DU CA (hereinafter, CA) is configured (or to be configured). For example, the UE ID may include identification information of the terminal for distinguishing the terminal between the DUs 621 and 622 for the CA. For example, the Serving cell list may include one or more SCells that provide the information on the PHR of the terminal indicated by the UE ID. For example, the Serving cell index may include an index of the SCell of the CA configured for the terminal indicated by the UE ID.

For example, the PHR Tx system Time may represent a time when the PHR is received from the terminal indicated by the UE ID. For example, the time when the PHR is received may represent time information when the PHR is received by the SCell (or the sDU 622). For example, the PHR Type may indicate a type of the PHR. For example, the type of the PHR may include 'SINGLE' and 'MULTIPLE'. For example, in a case that the type indicates 'SINGLE', the PHR may be a single entry PHR MAC CE. For example, in a case that the type indicates 'MULTIPLE', the PHR may be a multiple entry PHR MAC CE.

For example, the PHR MAC CE SIZE may indicate a size of the PHR. For example, the PHR, which is the single entry PHR MAC CE, may have a fixed size. For example, the PHR, which is the multiple entry PHR MAC CE, may have a variable size.

For example, the PHR MAC CE may include a power headroom (PH) level included in the PHR and a maximum power (e.g., P_{CMAX,f,c}). For example, in a case that the PHR is a single entry PHR MAC CE, the PHR MAC CE may have one PH level and a maximum power corresponding to the PH level. For example, in a case of the PHR, which is the multiple entry PHR MAC CE, the PHR MAC CE may have a plurality of PH levels and a plurality of maximum powers corresponding to the plurality of PH levels. In addition, in a case of the PHR, which is the multiple entry PHR MAC CE, the PHR MAC CE may further include a field Cᵢ for indicating existence of a PH field for a serving cell, a field V for indicating whether a PH level is a value based on a real transmission or a reference format, and a field P for indicating whether a power backoff is applied.

For example, the pDU 621 may recognize, based on the PHR management message received from the sDU 622, a power (or a maximum power) used (or that may be used) for the uplink transmission to the terminal. In the example 1000 of FIG. 10A, an example in which the sDU 622 shares the information on the PHR with the pDU 621 as the terminal provides the information on the PHR to the sDU 622 is illustrated, but the present disclosure is not limited thereto.

An example 1050 of FIG. 10B may represent an example of the PHR management procedure. For example, the PHR management procedure may be used to recognize an amount of a power available at the terminal (or a UE side) in the pDU 621 and the sDU 622.

Referring to the example 1050, in operation 1055, the pDU 621 may transmit a PHR management message. For example, the pDU 621 may transmit the PHR management message to the sDU 622 through the interface (e.g., the interface 645 of FIG. 6A) between the DUs. For example, the pDU 621 may obtain information on a PHR from the terminal. For example, the pDU 621 may obtain the information on the PHR of the terminal from a radio unit (RU) related to the PCell of the CA configured for the terminal. For example, the RU may receive the information on the PHR from the terminal through an uplink transmission (e.g., a PUSCH transmission) on the PCell provided by the pDU 621. For example, the pDU 621 may generate the PHR management message based on the received information on the PHR and transmit the generated PHR management message to the sDU 622.

For example, the information on the PHR may include information on a transmission power that may be used during the uplink transmission at the terminal. For example, the PHR may be included in a medium access control (MAC) control element (CE). For example, the MAC CE may include a MAC header having an index.

For example, the PHR management message may include the information (or an information element (IE)) on the PHR. An example of the information included in the PHR management message may refer to the Table 9. For example, the Serving cell list included in the PHR management message transmitted from the pDU 621 to the sDU 622 may include one or more PCells that provide the information on the PHR of the terminal indicated by the UE ID. For example, the Serving cell index may include an index of the PCell of the CA configured for the terminal indicated by the UE ID. Detailed content of the IE included in the PHR management message transmitted from the pDU 621 to the sDU 622 may refer to the Table 9 of FIG. 10A.

For example, the sDU 622 may recognize, based on the PHR management message received from the pDU 621, a power (or a maximum power) that may be used for the uplink transmission at the terminal.

Referring to FIG. 10A and FIG. 10B, the terminal may transmit the information on the PHR of the terminal to the pDU 621 or the sDU 622. At this time, the pDU 621 or the sDU 622 obtaining the information on the PHR may recognize (or share, exchange) a transmission power of the terminal through the PHR management message. In FIG. 10A and FIG. 10B, the inter-DU CA configured by the pDU 621 and one sDU 622 is illustrated, but the present disclosure is not limited thereto. For example, inter-DU CA may be configured by the pDU 621 and a plurality of sDUs. For example, the sDU 622 of FIG. 10A may transmit the PHR management message to another sDU other than the pDU 621. In addition, for example, the pDU 621 of FIG. 10B may transmit the PHR management message to another sDU other than the sDU 622.

Referring to FIG. 10A and FIG. 10B, in a case that the pDU 621 is a DU (or a split entity) that splits the power among the DUs for providing the inter-DU CA , the sDU 622 (or a gNB-DU of the SCell) may transmit the PHR management message to the pDU 621 (or a gNB-DU of the PCell). At this time, an operation in which the pDU 621 (or the gNB-DU of the PCell) transmits the PHR management message to the sDU 622 (or the gNB-DU of the SCell) may be optionally performed. In addition, an operation in which the sDU 622 (or the gNB-DU of the SCell) transmits the PHR management message to another sDU (or a gNB-DU of an SCell) may be optionally performed.

A name of a message illustrated in FIG. 10A and FIG. 10B is merely for convenience of description, and the present disclosure is not limited thereto. For example, a name of information exchanged between the DUs for providing the inter-DU CA and a name of a message including the information thereof may be changed. In addition, for example, a portion of information (or an information element (IE)) included in the message may be omitted or another configuration may be added.

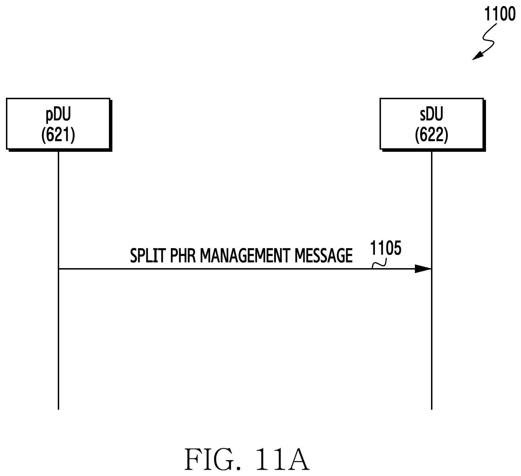

FIG. 11A to FIG. 11C illustrate examples of a split PHR management procedure for CA between DUs.

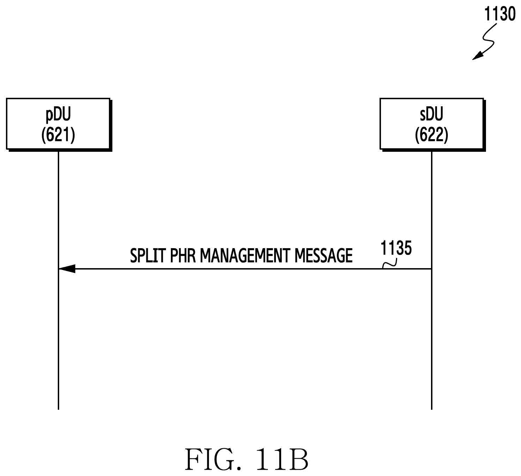

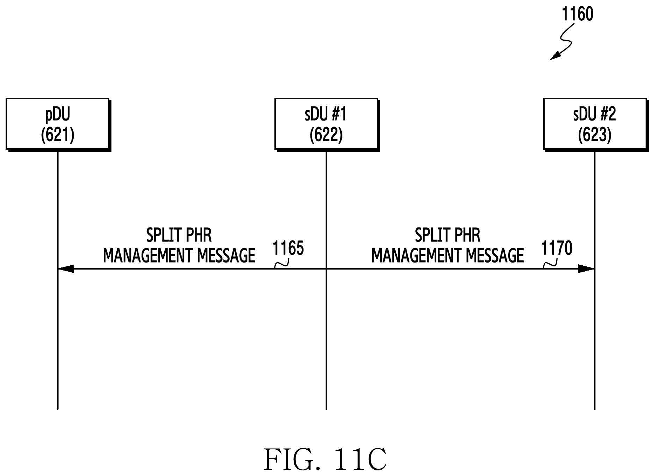

A pDU 621 of FIG. 11A, FIG. 11B, and FIG. 11C may be an example of the DU #1 621 of FIG. 6A. An sDU 622 of FIG. 11A, FIG. 11B, and FIG. 11C may be an example of the DU #2 622 of FIG. 6A. An sDU 623 of FIG. 11C may be an example of the DU #n 623 of FIG. 6A. For example, the pDU 621, the sDU 622, and the sDU 623 may provide inter-DU CA for a terminal (e.g., the terminal 120 of FIG. 1A and FIG. 1B or the terminal 625-1 of FIG. 6A). For example, the pDU 621 may provide a PCell of the inter-DU CA for the terminal. The pDU 621 may be referred to as a PCell gNB-DU or a first DU. For example, the sDU 622 may provide an SCell of the inter-DU CA for the terminal. For example, the sDU 623 may provide an SCell of the inter-DU CA for the terminal. The sDU 622 (or the sDU 623) may be referred to as an SCell gNB-DU or a second DU. Each of the pDU 621, the sDU 622, and the sDU 623 may include at least a portion of the components of the electronic device 500 of FIG. 5.

An example 1100 of FIG. 11A may represent an example of the split PHR management procedure. For example, the split PHR management procedure may be used to split (or distribute, segment) a power (or a transmission power) based on a PHR of the terminal in the inter-DU CA, and to provide split PHR information to the DUs for providing the inter-DU CA. In the example 1100 of FIG. 11A, a case that the pDU 621 among the DUs for providing the inter-DU CA is a DU (or a split entity) that splits the power is exemplified. However, the present disclosure is not limited thereto.

Referring to the example 1100, in operation 1105, the pDU 621 may transmit a split PHR management message. For example, the pDU 621 may transmit the split PHR management message to the sDU 622 through an interface (e.g., the interface 645 of FIG. 6A) between DUs. For example, the split PHR management message may be used for uplink scheduling for the terminal of the sDU 622.

For example, the pDU 621 may determine SCell uplink scheduling based on obtained information on the PHR of the terminal. For example, the pDU 621 may split a power (or a transmission power) to be used by the terminal to transmit data to be scheduled in the SCell, based on the information on the PHR. For example, the pDU 621 may determine the maximum number of RBs that may be allocated by the sDU 622. For example, the information on the PHR may be obtained directly from the terminal, or may be obtained by the PHR management message received from the sDU 622.

For example, the split PHR management message may include information (or an information element (IE)) on the power (or the transmission power) that is split for the terminal. An example of information included in the split PHR management message may refer to the following table.

**[Table 10]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell list | M | | | | | |
| >> Serving cell index | M | | | | | |
| >> PHR Tx System Time | M | | | | | |
| >> PHR index | M | | | | | |
| >> Pcmax | M | | | | | |
| >> PHR Tx RB | M | | | | | |
| >> Available Max number of RB | M | | | | | |
| >> SCell schedule allow | O | | | | | |

Referring to the above-described table, the 'M' of the table may represent mandatory information, and the 'O' may represent optional information. However, an embodiment of the present disclosure is not limited thereto. For example, in the table, IEs configured as the 'M' and the 'O' are merely exemplary. For example, an IE configured as the mandatory information 'M' may also be configured as the optional information 'O'. For example, the UE list may include one or more terminals for which the inter-DU CA (hereinafter, CA) is configured (or is to be configured). For example, the UE ID may include identification information of the terminal for distinguishing the terminal among the DUs 621 and 622 for the CA. For example, the Serving cell list may include one or more PCells for providing information on a split power.

For example, the Serving cell index may include an index of the PCell of the CA configured for the terminal indicated by the UE ID. For example, the PHR Tx system Time may represent a time when a PHR is received from the terminal indicated by the UE ID. For example, the PHR index may represent an index of a PHR indicating a split power. For example, the PHR index may represent an index of a PHR for a specific carrier. For example, the PHR index may have an index converted from an index indicating a PHR MAC CE of the PHR transmitted by the terminal. For example, the converted index may be updated by the pDU 621 to represent the PHR indicating the split power. For example, the Pcmax may represent a maximum transmission power available in the SCell of the sDU 622. For example, the PHR Tx RB may represent the number of RBs allocated when the PHR is transmitted by the terminal. For example, the Available Max number of RB may represent the maximum number of RBs that may be allocated in the SCell based on the split power. In the example 1100, the Available Max number of RB may include information on a power to be scheduled (or to be serviced) by the sDU 622. For example, the power may be changed (or calculated) according to the number of RBs to be allocated. However, the present disclosure is not limited thereto. For example, the Available Max number of RB may represent the maximum number of RBs that may be allocated in the PCell based on the split power. Alternatively, for example, the Available Max number of RB may represent the maximum number of RBs that may be allocated in the PCell and the maximum number of RBs that may be allocated in the SCell based on the split power.

For example, the SCell schedule allow may indicate whether scheduling in the SCell is allowed. For example, in a case that the SCell schedule allow indicates able, the sDU 622 may perform uplink scheduling for the terminal. In contrast, in a case that the SCell schedule allow indicates disable, the sDU 622 may be incapable of performing the uplink scheduling for the terminal. For example, the incapability of performing the uplink scheduling may be understood as refraining from (or omitting) the uplink scheduling. In the example 900, the SCell schedule allow included in the split PHR management message transmitted by the pDU 621 to the sDU 622 may be included in the split PHR management message as the pDU 621 detects whether the scheduling for the SCell of the sDU 622 is able to be performed. In other words, the pDU 621 determines a scheduling capability of the sDU 622, and a value of the SCell schedule allow may be determined accordingly. However, the present disclosure is not limited thereto.

In the example 1100 of FIG. 11A, the pDU 621, which is a split entity, may transmit the split PHR management message to the sDU 622 for providing the inter-DU CA. Thereafter, the sDU 622 may perform the uplink scheduling for the terminal using the split PHR management message. The terminal may transmit an uplink transmission (e.g., a PUSCH) to the sDU 622 according to a scheduled resource. In this case, the terminal may perform the uplink transmission to the pDU 621 according to the inter-DU CA.

An example 1130 of FIG. 11B may represent an example of the split PHR management procedure. For example, the split PHR management procedure may be used to split (or distribute, segment) a power (or a transmission power) based on the PHR of the terminal in the inter-DU CA, and to provide split PHR information to the DUs for providing the inter-DU CA. In the example 1130 of FIG. 11B, a case that the sDU 622 among the DUs for providing the inter-DU CA is a DU (or a split entity) that splits the power is exemplified. However, the present disclosure is not limited thereto.

Referring to the example 1130, in operation 1135, the pDU 621 may receive a split PHR management message. For example, the sDU 622 may transmit the split PHR management message to the pDU 621 through the interface (e.g., the interface 645 of FIG. 6A) between the DUs. For example, the split PHR management message may be used for uplink scheduling for the terminal of the pDU 621.

For example, the sDU 622 may determine PCell uplink scheduling based on obtained information on the PHR of the terminal. For example, the pDU 621 may split a power (or a transmission power) to be used by the terminal to transmit data to be scheduled in the PCell, based on the information on the PHR. For example, the sDU 622 may determine the maximum number of RBs that may be allocated by the pDU 621. For example, the information on the PHR may be obtained directly from the terminal, or may be obtained by the PHR management message received from the pDU 621.

For example, the split PHR management message may include information (or an information element (IE)) on the power (or the transmission power) that is split for the terminal. An example of the information included in the split PHR management message may refer to the Table 10. For example, the Serving cell list included in the split PHR management message transmitted from the sDU 622 to the pDU 621 may include one or more SCells that provide the information on the split power. For example, the Serving cell index in the split PHR management message transmitted from the sDU 622 to the pDU 621 may include an index of the SCell of the CA configured for the terminal indicated by the UE ID. For example, the Available Max number of RB included in the split PHR management message transmitted from the sDU 622 to the pDU 621 may represent the maximum number of RBs that may be allocated in the PCell based on the split power. In the example 1130, the Available Max number of RB may include the information on the power to be scheduled (or to be serviced) by the pDU 621. For example, the power may be changed (or calculated) according to the number of RBs to be allocated. However, the present disclosure is not limited thereto. For example, the Available Max number of RB may represent the maximum number of RBs that may be allocated in the PCell based on the split power. Alternatively, for example, the Available Max number of RB may represent the maximum number of RBs that may be allocated in the PCell and the maximum number of RBs that may be allocated in the SCell based on the split power.

For example, the SCell schedule allow included in the split PHR management message transmitted from the sDU 622 to the pDU 621 may indicate whether scheduling in the SCell is allowed. For example, in a case that the SCell schedule allow indicates able, the sDU 622 may perform the uplink scheduling for the terminal. In contrast, in a case that the SCell schedule allow indicates disable, the sDU 622 may be incapable of performing the uplink scheduling for the terminal. In the example 1130, the SCell schedule allow included in the split PHR management message transmitted by the sDU 622 to the pDU 621 may be included in the split PHR management message as the sDU 622 detects whether the scheduling for the SCell is able to be performed. In other words, the sDU 622 directly determines a scheduling capability for the SCell, and a value of the SCell schedule allow may be determined accordingly.

In the example 1130 of FIG. 11B, the sDU 622, which is a split entity, may transmit the split PHR management message to the pDU 621 for providing the inter-DU CA. Thereafter, the pDU 621 may perform the uplink scheduling for the terminal using the split PHR management message. The terminal may transmit an uplink transmission (e.g., a PUSCH) to the pDU 621 according to a scheduled resource. In this case, the terminal may perform the uplink transmission to the sDU 622 according to the inter-DU CA.

An example 1160 of FIG. 11C may represent an example of the split PHR management procedure. For example, the split PHR management procedure may be used to split (or distribute, segment) a power (or a transmission power) based on the PHR of the terminal in the inter-DU CA, and to provide split PHR information to the DUs for providing the inter-DU CA. In the example 1160 of FIG. 11C, a case that the sDU 622 among the DUs for providing the inter-DU CA is a DU (or a split entity) that splits the power is exemplified. In this case, the DUs may further include the pDU 621 and the sDU 623.

Referring to the example 1160, in operation 1165, the pDU 621 may receive a split PHR management message. For example, the sDU 622 (e.g., an sDU #1) may transmit the split PHR management message to the pDU 621 through the interface (e.g., the interface 645 of FIG. 6A) between the DUs. For example, the split PHR management message may be used for uplink scheduling for the terminal of the pDU 621. In addition, in operation 1170, the sDU 623 (e.g., sDU #2) may receive the split PHR management message. For example, the sDU 622 may transmit the split PHR management message to the sDU 623 through the interface (e.g., the interface 645 of FIG. 6A) between the DUs. For example, the split PHR management message may be used for the uplink scheduling for the terminal of the sDU 623. Detailed content of the split PHR management message transmitted from the sDU 622 to each of the pDU 621 and the sDU 623 may refer to the Table 10.

In the example 1160 of FIG. 11C, the sDU 622, which is a split entity, may transmit the split PHR management message to each of the pDU 621 and the sDU 623 for providing the inter-DU CA. Thereafter, the pDU 621 and the sDU 623 may perform the uplink scheduling for the terminal using the split PHR management message. In FIG. 11C, an example in which the sDU 622 is a split entity is illustrated, but the present disclosure is not limited thereto. For example, the pDU 621 may be a split entity, and the pDU 621 may transmit the split PHR management message to each of sDUs 622 and 623 for providing the inter-DU CA.

Referring to FIG. 11A to FIG. 11C, in a case that the pDU 621 among the DUs for providing the inter-DU CA is the DU (or the split entity) that splits the power, the pDU 621 (or a gNB-DU of the PCell) may transmit the split PHR management message to the sDU 622 (or a gNB-DU of the SCell). In this case, an operation in which the sDU 622 (or the gNB-DU of the SCell) transmits the split PHR management message to the pDU 621 (or the gNB-DU of the PCell) may be optionally performed. In addition, an operation in which the sDU 622 (or the gNB-DU of the SCell) transmits the split PHR management message to another sDU (or a gNB-DU of an SCell) may be optionally performed.

A name of a message exemplified in FIG. 11A to FIG. 11C is merely for convenience of description, and the present disclosure is not limited thereto. For example, a name of information exchanged between the DUs for providing the inter-DU CA and a name of a message including the information thereof may be changed. In addition, for example, a portion of the information (or IE) included in the message may be omitted or another configuration may be added.

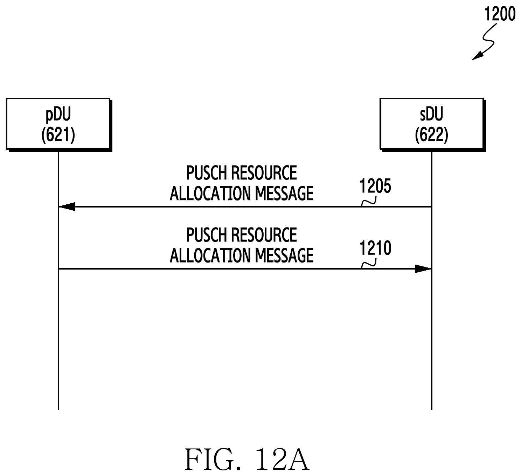

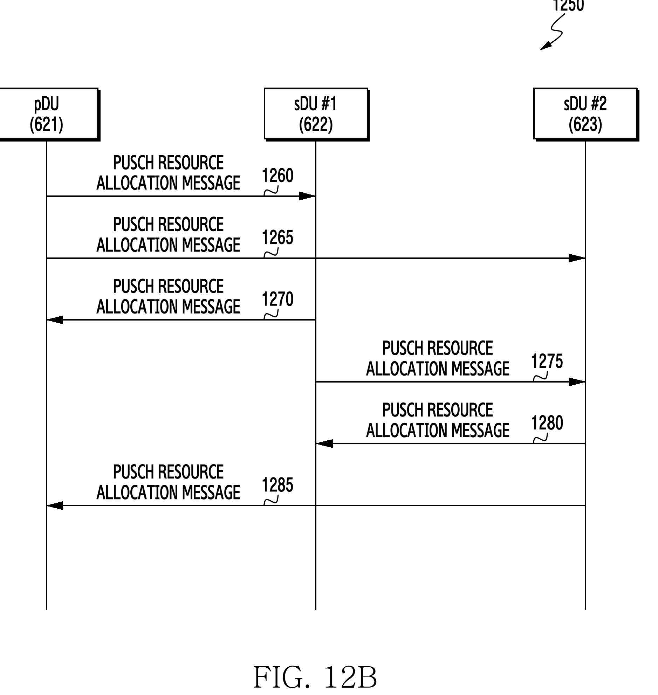

FIG. 12A and FIG. 12B illustrate examples of a physical uplink shared channel (PUSCH) resource allocation procedure for CA between DUs.

A pDU 621 of FIG. 12A may be an example of the DU #1 621 of FIG. 6A. An sDU 622 of FIG. 12A may be an example of the DU #2 622 of FIG. 6A. For example, the pDU 621 and the sDU 622 may provide inter-DU CA for a terminal (e.g., the terminal 120 of FIG. 1A and FIG. 1B or the terminal 625-1 of FIG. 6A). For example, the pDU 621 may provide a PCell of the inter-DU CA for the terminal. The pDU 621 may be referred to as a PCell gNB-DU or a first DU. For example, the sDU 622 may provide an SCell of the inter-DU CA for the terminal. The sDU 622 may be referred to as an SCell gNB-DU or a second DU. Each of the pDU 621 and the sDU 622 may include at least a portion of the components of the electronic device 500 of FIG. 5.

An example 1200 of FIG. 12A may represent an example of the PUSCH resource allocation procedure. For example, the PUSCH resource allocation procedure may be used for each of the pDU 621 and the sDU 622 to provide another cell with information on a resource allocated to the terminal (or a UE side). For example, the information on the resource allocated for the PUSCH may be used for hybrid automatic repeat request-acknowledgement (HARQ-ACK) decoding or estimation of a channel condition.

Referring to the example 1200, in operation 1205, the pDU 621 may receive a PUSCH resource allocation message. For example, the pDU 621 may receive the PUSCH resource allocation message from the sDU 622 through an interface (e.g., the interface 645 of FIG. 6A) between the DUs. Hereinafter, for convenience of description, the PUSCH resource allocation message received by the pDU 621 from the sDU 622 may be referred to as a first PUSCH resource allocation message.

For example, in operation 1210, the pDU 621 may transmit a PUSCH resource allocation message. For example, the pDU 621 may transmit the PUSCH resource allocation message to the sDU 622 through the interface (e.g., the interface 645 of FIG. 6A) between the DUs. Hereinafter, for convenience of description, the PUSCH resource allocation message transmitted by the pDU 621 to the sDU 622 may be referred to as a second PUSCH resource allocation message.

In the example 1200 of FIG. 12A, the pDU 621 is illustrated as first receiving the first PUSCH resource allocation message from the sDU 622 and transmitting the second PUSCH resource allocation message, but the present disclosure is not limited thereto. For example, the pDU 621 may transmit the second PUSCH resource allocation message before receiving the first PUSCH resource allocation message from the sDU 622 or at the same time.

For example, the PUSCH resource allocation message may include information (or an information element (IE)) on an allocated uplink resource. An example of the information included in the PUSCH resource allocation message may be refer to the following table.

**[Table 11]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell index | M | | | | | |
| > PUSCH Air Time | M | | | | | |
| > Service Type | M | | | | | |
| > MCS level | M | | | | | |
| > TBS Size | M | | | | | |
| > Number of allocated RB | M | | | | | |
| > Number of layer | M | | | | | |
| > Retx Type | M | | | | | |
| > Waveform | M | | | | | |

Referring to the above-described table, the 'M' of the table may represent mandatory information. However, an embodiment of the present disclosure is not limited thereto. For example, in the table, IEs configured as the 'M' are merely exemplary. For example, an IE configured as the mandatory information 'M' may also be configured as optional information 'O'. For example, the UE list may include one or more terminals for which the inter-DU CA (hereinafter, CA) is configured (or to be configured). For example, the UE ID may include identification information of the terminal for distinguishing the terminal between the DUs 621 and 622 for the CA. For example, the Serving cell index may include an index of the PCell or the SCell of the CA configured for the terminal indicated by the UE ID. For example, the first PUSCH resource allocation message including a resource allocation result of the sDU 622 may include the index of the SCell. For example, the second PUSCH resource allocation message including a resource allocation result of the pDU 621 may include the index of the PCell.

For example, the PUSCH Air Time may represent a time when the terminal indicated by the UE ID performs transmission of the PUSCH. For example, the Service Type may represent a service type provided by the transmission of the PUSCH. For example, the service type may include a scheduling request (SR), a quality of service (QoS), an enhanced voice new radio (VoNR), and an enhanced video new radio (ViNR). However, the present disclosure is not limited thereto.

For example, the MCS level may represent an MCS level for the PUSCH. For example, the TBS Size may represent a size of a TBS for the PUSCH. For example, the Number of allocated RB may represent the number of RBs allocated for the PUSCH. For example, the Number of layer may represent the number of transmission layers for the transmission of the PUSCH. For example, the Retx Type may indicate whether the transmission of the PUSCH is a retransmission. For example, the Waveform may represent a waveform of the PUSCH. For example, the waveform may include a cyclic prefix-orthogonal frequency division multiplexing (CP-OFDM) or a discrete Fourier transform spread-OFDM (DFT-s OFDM). However, the present disclosure is not limited thereto.

For example, each of the pDU 621 and the sDU 622 may recognize a result scheduled for the terminal (or a result of the resource allocation) through the PUSCH resource allocation message. By sharing the result, the pDU 621 and the sDU 622 may more accurately allocate the uplink resource or perform a split of a BSR and/or a PHR. In an example of FIG. 12A, the PUSCH resource allocation procedure between the pDU 621 and one sDU 622 is illustrated, but the present disclosure is not limited thereto. For example, for a PUSCH resource allocation procedure between the pDU 621 and a plurality of sDUs, FIG. 12B may be referred to.

FIG. 12B illustrates an example 1250 of a PUSCH resource allocation procedure between the pDU 621 and sDUs 622 and 623. The pDU 621 of FIG. 12B may be an example of the DU #1 621 of FIG. 6A. The sDU 622 (e.g., an sDU #1) of FIG. 12B may be an example of the DU #2 622 of FIG. 6A. The sDU 623 (e.g., an sDU #2) of FIG. 12B may be an example of the DU #n 623 of FIG. 6A. For example, the pDU 621, the sDU 622, and the sDU 623 may provide the inter-DU CA for the terminal (e.g., the terminal 120 of FIG. 1A and FIG. 1B or the terminal 625-1 of FIG. 6A). For example, the pDU 621 may provide a PCell of the inter-DU CA for the terminal. The pDU 621 may be referred to as a PCell gNB-DU or a first DU. For example, the sDU 622 may provide an SCell of the inter-DU CA for the terminal. For example, the sDU 623 may provide an SCell of the inter-DU CA for the terminal. The sDU 622 (or the sDU 623) may be referred to as an SCell gNB-DU or a second DU. Each of the pDU 621, the sDU 622, and the sDU 623 may include at least a portion of the components of the electronic device 500 of FIG. 5.

Referring to the example 1250, in operation 1260 and operation 1265, the pDU 621 may transmit a PUSCH resource allocation message. For example, the pDU 621 may transmit a PUSCH resource allocation message representing a PUSCH resource allocation result of the pDU 621 to the sDU 622. In addition, the pDU 621 may transmit a PUSCH resource allocation message representing the PUSCH resource allocation result of the pDU 621 to the sDU 623.

For example, an operation 1270 and operation 1275, the sDU 622 may transmit a PUSCH resource allocation message. For example, the sDU 622 may transmit a PUSCH resource allocation message representing the PUSCH resource allocation result of the sDU 622 to the pDU 621. In addition, the sDU 622 may transmit a PUSCH resource allocation message representing the PUSCH resource allocation result of the sDU 622 to the sDU 623.

For example, in operation 1280 and operation 1285, the sDU 623 may transmit a PUSCH resource allocation message. For example, the sDU 623 may transmit a PUSCH resource allocation message representing a PUSCH resource allocation result of the sDU 623 to the pDU 621. In addition, the sDU 623 may transmit a PUSCH resource allocation message representing the PUSCH resource allocation result of the sDU 623 to the sDU 622.

For detailed content of the PUSCH resource allocation message transmitted by the pDU 621, the sDU 622, and the sDU 623, the above Table 11 may be referred to. Referring to FIG. 12B, through signaling between the pDU 621 and the plurality of sDUs 622 and 623, DUs providing the inter-DU CA may recognize (or share) results of uplink resource allocation of each DU. Accordingly, each of the DUs may perform more accurate uplink resource allocation and a PHR split and a BSR split.

In an example, the PUSCH resource allocation message of FIG. 12A and FIG. 12B may be periodically transmitted and received according to a transmission time interval (TTI). For example, the BSR management message of FIG. 8A and FIG. 8B may be periodically transmitted and received according to a first time interval longer than the period according to the TTI. For example, the first time interval may represent a time interval in which a BSR (or information on the BSR) related to the BSR management message is received. For example, the PHR management message of FIG. 10A and FIG. 10B may be periodically transmitted and received according to a second time interval longer than the first time interval. For example, the second time interval may represent a time interval in which a PHR (or information on the PHR) related to the PHR management message is received.

Referring to FIG. 8A and FIG. 8B, in a case that the pDU 621 among the DUs for providing the inter-DU CA is a DU (or a split entity) that splits the buffer and/or the power, the sDU 622 (or a gNB-DU of the SCell) may transmit a PUSCH resource allocation message to the pDU 621 (or a gNB-DU of the PCell). In this case, the pDU 621 (or the gNB-DU of the PCell) may transmit the PUSCH resource allocation message to the sDU 622 (or the gNB-DU of the SCell). In contrast, an operation in which the sDU 622 (or the gNB-DU of the SCell) transmits the PUSCH resource allocation message to another sDU (or a gNB-DU of an SCell) may be optionally performed.

A name of a message illustrated in FIG. 12A and FIG. 12B is merely for convenience of description, and the present disclosure is not limited thereto. For example, a name of information exchanged between the DUs for providing the inter-DU CA and a name of a message including the information thereof may be changed. In addition, for example, a portion of the information (or IE) included in the message may be omitted or another configuration may be added.

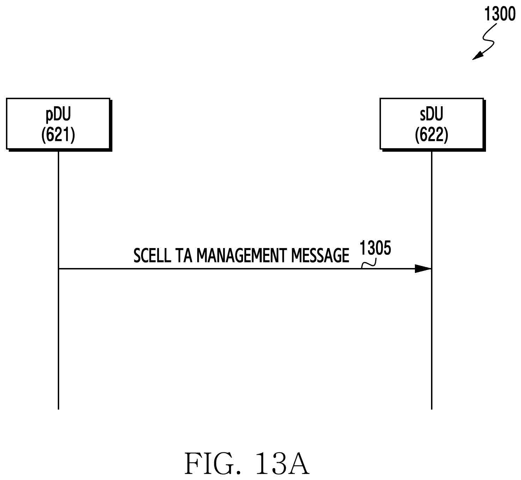

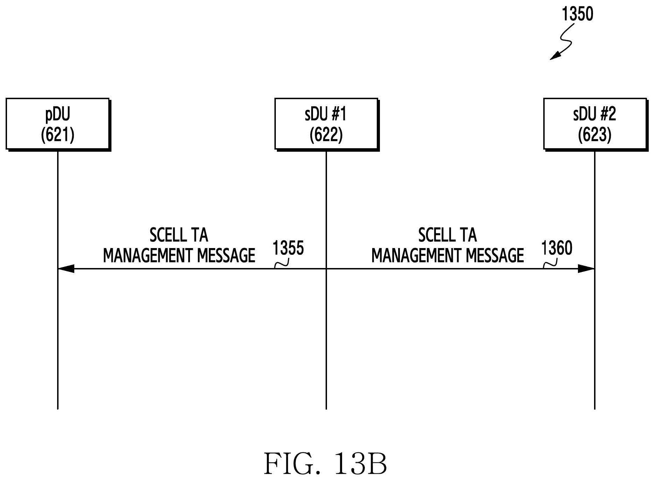

FIG. 13A and FIG. 13B illustrate examples of a timing advance (TA) management procedure of an SCell for CA between DUs.

A pDU 621 of FIG. 13A and FIG. 13B may be an example of the DU #1 621 of FIG. 6A. An sDU 622 of FIG. 13A and FIG. 13B may be an example of the DU #2 622 of FIG. 6A. An sDU 623 of FIG. 13B may be an example of the DU #n 623 of FIG. 6A. For example, the pDU 621, the sDU 622, and the sDU 623 may provide inter-DU CA for a terminal (e.g., the terminal 120 of FIG. 1A and FIG. 1B or the terminal 625-1 of FIG. 6A). For example, the pDU 621 may provide a PCell of the inter-DU CA for the terminal. The pDU 621 may be referred to as a PCell gNB-DU or a first DU. For example, the sDU 622 may provide an SCell of the inter-DU CA for the terminal. For example, the sDU 623 may provide an SCell of the inter-DU CA for the terminal. The sDU 622 (or the sDU 623) may be referred to as an SCell gNB-DU or a second DU. Each of the pDU 621, the sDU 622, and the sDU 623 may include at least a portion of the components of the electronic device 500 of FIG. 5.

An example 1300 of FIG. 13A may represent an example of the SCell timing advance (TA) management procedure. For example, the SCell TA management procedure may be used to determine whether uplink transmission for the SCell is possible according to a timing mismatch between the SCell of the sDU 622 and the terminal.

For example, a timing for an uplink of the PCell may be aligned based on a timing for a downlink of the PCell. In addition, a timing for an uplink of the SCell may be aligned based on a timing for a downlink of the SCell. For example, unlike the PCell for which the timing matching is possible according to a random access procedure, the SCell may require the SCell TA management procedure since there is no method for aligning the SCell uplink timing with the terminal.

For example, in a case that the terminal is a terminal supporting a single timing advance group (TAG) (or a single TAG terminal), the SCell TA management procedure may be necessarily required. For example, timing synchronization between the DUs 621 and 622 may be performed through a global positioning system (GPS). Even when the timing synchronization between the DUs 621 and 622 is performed, a timing of cells (e.g., the PCell of the pDU 621 and the SCell of the sDU 622) of the DUs 621 and 622 may be mismatched. For example, a difference of 10 timing advance (TA) or more may occur in the timing between the cells. However, since the single TAG terminal may not support different TA values for each of the cells, it is necessary to determine whether to perform the inter-DU CA using the SCell according to the SCell TA management procedure. In contrast, in a case that the terminal is a terminal supporting a multiple TAG (or a multiple TAG terminal), the SCell TA management procedure may be optionally used.

Referring to the example 1300, in operation 1305, the pDU 621 may receive an SCell TA management message. For example, the pDU 621 may receive the SCell TA management message from the sDU 622 through an interface (e.g., the interface 645 of FIG. 6A) between the DUs.

For example, the SCell TA management message may include information (or an information element (IE)) on a difference of a time offset (or a timing offset) between the SCell measured by the sDU 622 and the terminal. An example of the information included in the SCell TA management message may be refer to the following table.

**[Table 12]**

| **IE/Group Name** | **Presence** | **Range** | **IE type and reference** | **Semantics description** | **Criticality** | **Assigned Criticality** |
|---|---|---|---|---|---|---|
| UE list | M | | | | | |
| > UE ID | M | | | | | |
| > Serving cell index | M | | | | | |
| > Time offset difference | M | | | | | |

Referring to the above-described table, the 'M' of the table may represent mandatory information. However, an embodiment of the present disclosure is not limited thereto. For example, in the table, IEs configured as the 'M' are merely exemplary. For example, an IE configured as the mandatory information 'M' may also be configured as optional information 'O'. For example, the UE list may include one or more terminals for which the inter-DU CA (hereinafter, CA) is configured (or to be configured). For example, the UE ID may include identification information of the terminal for distinguishing the terminal between the DUs 621 and 622 for the CA. For example, the Serving cell index may include an index of the SCell having the time offset difference measured by the sDU 622 for the terminal identified by the UE ID. For example, the Time offset difference may represent a time offset difference between the terminal indicated by the UE ID and the SCell indicated by the Serving cell index.

Referring to the above, in a case that the pDU 621 is a DU, which is a split entity of a BSR and/or a PHR, the pDU 621 may determine whether to use the SCell of the sDU 622 by using the SCell TA management message. For example, the pDU 621 may determine not to use the SCell in a case that the time offset difference of the SCell TA management message is greater than or equal to a threshold difference. For example, the pDU 621 may determine to use the SCell in a case that the time offset difference of the SCell TA management message is less than the threshold difference. In the example 1300 of FIG. 13A, an example in which the pDU 621 determines whether to use the SCell is described, but the present disclosure is not limited thereto. For example, in a case that the DU, which is the split entity of the BSR and/or the PHR, is the sDU 622, the sDU 622 may determine whether to use the SCell of the sDU 622 based on the measured time offset difference. For example, in a case that the sDU 622 determines not to use the SCell, the sDU 622 may transmit, to the DU 621, a message (e.g., a split BSR management message or a split PHR management message) including the SCell schedule allow indicating 'disable'. Accordingly, the pDU 621 may update a state of the SCell of the sDU 622 to a deactivation state, or the sDU 622 may perform a deactivation request of the SCell.

In the example 1300 of FIG. 13A, the SCell TA management procedure including signaling between the pDU 621 and one sDU 622 is illustrated, but the present disclosure is not limited thereto. For example, the SCell TA management procedure may include signaling between the pDU 621 and a plurality of sDUs. For a detailed example related thereto, an example 1350 of FIG. 13B below may be referred to.

Referring to the example 1350, in operation 1355, the sDU 622 may transmit an SCell TA management message to the pDU 621. In addition, in operation 1360, the sDU 622 may transmit the SCell TA management message to the sDU 623. For example, the Time offset difference of the SCell TA management message transmitted to the pDU 621 may represent a time offset difference between the SCell of the sDU 622 and the terminal. In addition, for example, the Time offset difference of the SCell TA management message transmitted to the sDU 623 may represent a time offset difference between the SCell of the sDU 622 and the terminal. In other words, SCell TA management messages transmitted from the sDU 622 may include the same information.

In the example 1350 of FIG. 13B, an example in which the sDU 622 transmits the SCell TA management message to the pDU 621 and the sDU 623 at the same time is illustrated, but the present disclosure is not limited thereto. For example, the sDU 622 may transmit the SCell TA management message to the pDU 621 and then transmit the SCell TA management message to the sDU 623, or transmit the SCell TA management message to the sDU 623 and then transmit the SCell TA management message to the pDU 621.

Referring to FIG. 13A and FIG. 13B, in a case that, among the DUs for providing the inter-DU CA, the pDU 621 is the DU (or the split entity) that splits the buffer and/or the power, and the terminal is a single TAG terminal, the sDU 622 (or a gNB-DU of the SCell) may transmit the SCell TA management message to the pDU 621 (or a gNB-DU of the PCell). In a case that the terminal is a multiple TAG terminal, an operation in which the sDU 622 (or the gNB-DU of the SCell) transmits the SCell TA management message to the pDU 621 (or the gNB-DU of the PCell) may be optionally performed. In addition, regardless of the terminal (or, in a case that the terminal is the single TAG terminal or the multiple TAG terminal), an operation in which the sDU 622 (or the gNB-DU of the SCell) transmits the PUSCH resource allocation message to another sDU (or a gNB-DU of an SCell) may be optionally performed.

A name of a message illustrated in FIG. 13A and FIG. 13B is merely for convenience of description, and the present disclosure is not limited thereto. For example, a name of information exchanged between the DUs for providing the inter-DU CA and a name of a message including the information thereof may be changed. In addition, for example, a portion of the information (or IE) included in the message may be omitted or another configuration may be added.

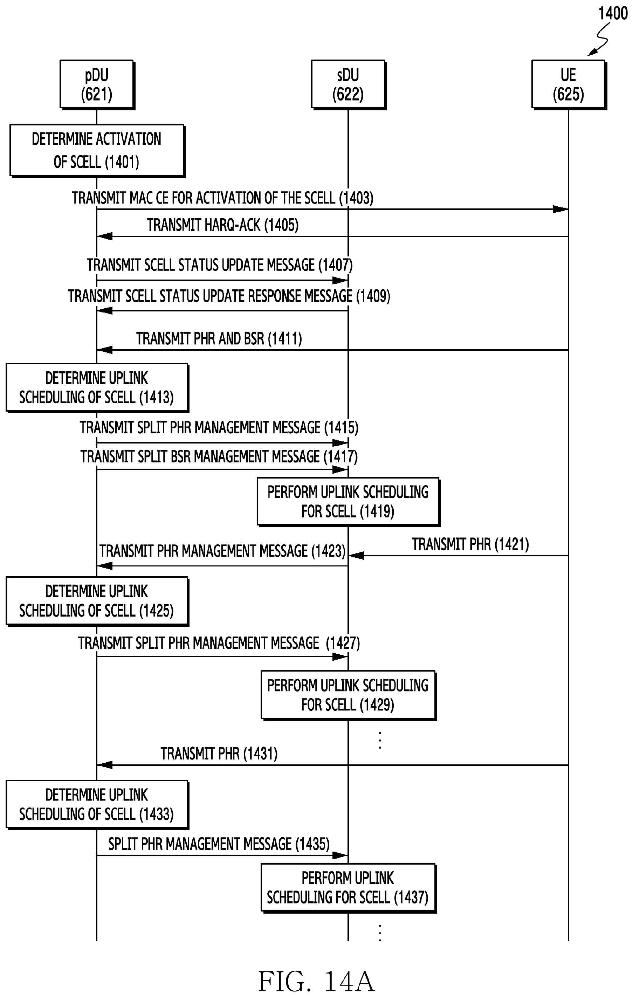

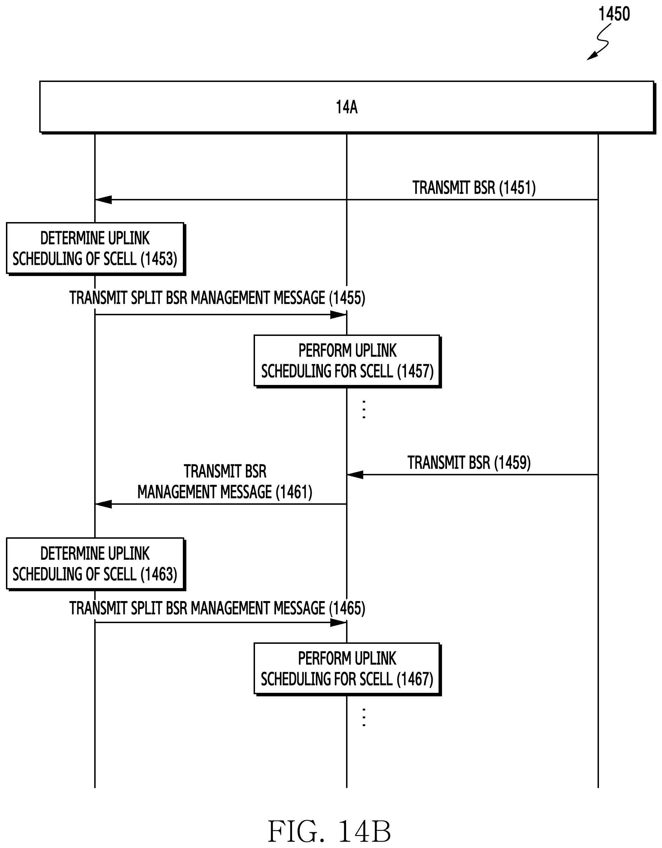

FIG. 14A and FIG. 14B illustrate an example of a signal flow for a method of performing uplink resource allocation for a terminal in CA between DUs.

A pDU 621 of FIG. 14A and FIG. 14B may be an example of the DU #1 621 of FIG. 6A. An sDU 622 of FIG. 14A and FIG. 14B may be an example of the DU #2 622 of FIG. 6A. A terminal 625 of FIG. 14A and FIG. 14B may be an example of the terminal 625-1 of FIG. 6A. For example, the pDU 621 and the sDU 622 may provide inter-DU CA for the terminal 625. For example, the pDU 621 may provide a PCell of the inter-DU CA for the terminal 625. The pDU 621 may be referred to as a PCell gNB-DU or a first DU. For example, the sDU 622 may provide an SCell of the inter-DU CA for the terminal 625. The sDU 622 may be referred to as an SCell gNB-DU or a second DU. Each of the pDU 621 and the sDU 622 may include at least a portion of the components of the electronic device 500 of FIG. 5.

FIG. 14A and FIG. 14B illustrate examples 1400 and 1450 of a signal flow for a method for performing uplink resource allocation in the inter-DU CA for the terminal 625. The example 1450 of FIG. 14B may represent an example of a signal flow subsequent to the example 1400 of FIG. 14A. A signal flow between the terminal 625 and the DUs 621 and 622 illustrated in the example 1400 of FIG. 14A and the example 1450 of FIG. 14B is merely exemplary for convenience of description, and the present disclosure is not limited thereto. In the examples 1400 and 1450 of FIG. 14A and FIG. 14B, a case in which the pDU 621 is a DU, which is a split entity of uplink scheduling in the inter-DU CA is illustrated, but the present disclosure is not limited thereto.

Referring to the example 1400 of FIG. 14A, in operation 1401, the pDU 621 may determine activation of the SCell. For example, the pDU 621 may determine addition and activation of the sDU 622 in order to provide the inter-DU CA for the terminal 625.

For example, in operation 1403, the pDU 621 may transmit a MAC CE for the activation of the SCell to the terminal 625. For example, the pDU 621 may transmit, to the terminal 625, the MAC CE indicating the activation of the SCell based on determining the activation. Accordingly, the terminal 625 may recognize that the SCell for the inter-DU CA is activated based on receiving the MAC CE. For example, the MAC CE may be transmitted to the terminal 625 through a physical downlink shared channel (PDSCH).

For example, in operation 1405, the terminal 625 may transmit a HARQ-ACK to the pDU 621. For example, the HARQ-ACK may be a response to the MAC CE for the activation of the SCell.

For example, in operation 1407, the pDU 621 may transmit an SCell status update message to the sDU 622. For example, the pDU 621 may transmit, to the sDU 622, the SCell status update message for the activating the SCell of the sDU 622. For example, in operation 1409, the sDU 622 may transmit an SCell status update response message to the pDU 621. For example, for detailed content of the SCell status update message and the SCell status update response message, FIG. 7A may be referred to. According to the operation 1407 and the operation 1409, the SCell of the sDU 622 may be changed to an activation state.

For example, in operation 1411, the terminal 625 may transmit a PHR and a BSR to the pDU 621. For example, the PHR and the BSR may be transmitted to the pDU 621 through a PUSCH transmission of the terminal 625. In the operation 1411, the PHR and the BSR may be transmitted together through the PUSCH transmission.

For example, in operation 1413, the pDU 621 may determine the uplink scheduling of the SCell by using the received the PHR and the received the BSR. For example, the pDU 621 may determine an amount of a buffer and a power to be scheduled by the pDU 621 for the terminal 625, and determine an amount of a buffer and a power to be scheduled by the sDU 622 for the terminal 625, according to the received the PHR and the received the BSR from the terminal 625. Accordingly, the pDU 621 may generate split PHR information and split BSR information.

For example, in operation 1415, the pDU 621 may transmit a split PHR management message including the split PHR information to the sDU 622. For detailed content of the split PHR management message, the content of FIG. 11A may be referred to. In addition, for example, in operation 1417, the pDU 621 may transmit a split BSR management message including the split BSR information to the sDU 622. For detailed content of the split BSR management message, the content of FIG. 9A may be referred to.

For example, in operation 1419, the sDU 622 may perform the uplink scheduling for the SCell by using the received the split PHR management message and the split BSR management message. For example, the sDU 622 may perform the uplink scheduling for the SCell for the terminal 625 based on the transmission power indicated by the split PHR management message and the amount of the buffer indicated by the split BSR management message. Although not illustrated in FIG. 14A, the sDU 622 may transmit configuration information according to the uplink scheduling to the terminal 625. Thereafter, the terminal 625 may perform an uplink transmission (e.g., a PUSCH transmission) according to the configuration information.

For example, in operation 1421, the terminal 625 may transmit a PHR to the sDU 622. For example, the PHR may be transmitted in the uplink transmission scheduled according to the operation 1419.

For example, in operation 1423, the sDU 622 may transmit a PHR management message including the information on the PHR received from the terminal 625 to the pDU 621. For example, the PHR management message may be used to share the information on the PHR received by the sDU 622 with the pDU 621. For detailed content of the PHR management message, the content of FIG. 10A may be referred to.

For example, in operation 1425, the pDU 621 may determine the uplink scheduling of the SCell by using the received the PHR management message. For example, the pDU 621 may determine a power to be scheduled by the pDU 621 for the terminal 625, and determine a power to be scheduled by the sDU 622 for the terminal 625, by using the information on the PHR of the PHR management message received from the sDU 622. Accordingly, the pDU 621 may generate split PHR information.

For example, in operation 1427, the pDU 621 may transmit a split PHR management message including the split PHR information to the sDU 622. For detailed content of the split PHR management message, the content of FIG. 11A may be referred to.

For example, in operation 1429, the sDU 622 may perform the uplink scheduling for the SCell by using the received the split PHR management message. For example, the sDU 622 may perform the uplink scheduling for the SCell for the terminal 625 based on a transmission power indicated by the split PHR management message. Although not illustrated in FIG. 14A, the sDU 622 may transmit configuration information according to the uplink scheduling to the terminal 625. Thereafter, the terminal 625 may perform an uplink transmission (e.g., a PUSCH transmission) according to the configuration information.

For example, in operation 1431, the terminal 625 may transmit a PHR to the pDU 621. For example, the PHR may be transmitted in the uplink transmission scheduled according to the operation 1429.

For example, in the operation 1433, the pDU 621 may determine the uplink scheduling of the SCell by using the received the PHR management message. For example, the pDU 621 may determine a power to be scheduled by the pDU 621 for the terminal 625, and determine a power to be scheduled by an sDU 622 for the terminal 625, by using the information on the PHR of the PHR management message received from the terminal 625. Accordingly, the pDU 621 may generate split PHR information.

Although not illustrated in the example 1400 of FIG. 14A, the pDU 621 may transmit the PHR management message including the information on the PHR received from the terminal 625 to the sDU 622. For example, the PHR management message may be used to share the information on the PHR received by the pDU 621 (or an RU related to the PCell of the pDU 621) with the sDU 622. For detailed content of the PHR management message, the content of FIG. 10B may be referred to.

For example, in operation 1435, the pDU 621 may transmit a split PHR management message including the split PHR information to the sDU 622. For detailed content of the split PHR management message, the content of FIG. 11A may be referred to.

For example, in operation 1437, the sDU 622 may perform the uplink scheduling for the SCell by using the received the split PHR management message. For example, the sDU 622 may perform the uplink scheduling for the SCell for the terminal 625 based on the transmission power indicated by the split PHR management message. Although not illustrated in FIG. 14A, the sDU 622 may transmit configuration information according to the uplink scheduling to the terminal 625. Thereafter, the terminal 625 may perform an uplink transmission (e.g., a PUSCH transmission) according to the configuration information.

Referring to the example 1450, for example, in operation 1451, the terminal 625 may transmit a BSR to the pDU 621. For example, the BSR may be transmitted in the uplink transmission scheduled according to the operation 1437.

For example, in operation 1453, the pDU 621 may determine the uplink scheduling of the SCell by using the received the BSR management message. For example, the pDU 621 may determine an amount of a buffer to be scheduled by the pDU 621 for the terminal 625, and determine an amount of a buffer to be scheduled by the sDU 622 for the terminal 625, by using the information on the BSR of the BSR management message received from the terminal 625. Accordingly, the pDU 621 may generate split BSR information.

Although not illustrated in the example 1450 of FIG. 14B, the pDU 621 may transmit a BSR management message including the information on the BSR received from the terminal 625 to the sDU 622. For example, the BSR management message may be used to share the information on the BSR received by the pDU 621 (or an RU related to the PCell of the pDU 621) with the sDU 622. For detailed content of the BSR management message, the content of FIG. 8B may be referred to.

For example, in operation 1455, the pDU 621 may transmit a split BSR management message including the split BSR information to the sDU 622. For detailed content of the split BSR management message, the content of FIG. 9A may be referred to.

For example, in operation 1457, the sDU 622 may perform the uplink scheduling for the SCell by using the received the split BSR management message. For example, the sDU 622 may perform the uplink scheduling for the SCell for the terminal 625 based on the amount of the buffer indicated by the split BSR management message. Although not illustrated in FIG. 14B, the sDU 622 may transmit configuration information according to the uplink scheduling to the terminal 625. Thereafter, the terminal 625 may perform an uplink transmission (e.g., a PUSCH transmission) according to the configuration information.

For example, in operation 1459, the terminal 625 may transmit a BSR to the sDU 622. For example, the BSR may be transmitted in the uplink transmission scheduled according to the operation 1457.

For example, in operation 1461, the sDU 622 may transmit a BSR management message including the information on the BSR received from the terminal 625 to the pDU 621. For example, the BSR management message may be used to share the information on the BSR received by the sDU 622 with the pDU 621. For detailed content of the BSR management message, the content of FIG. 8A may be referred to.

For example, in operation 1463, the pDU 621 may determine the uplink scheduling of the SCell by using the received the BSR management message. For example, the pDU 621 may determine the amount of the buffer to be scheduled by the pDU 621 for theterminal 625, and determine the amount of the buffer to be scheduled by the sDU 622 for the terminal 625, by using the information on the BSR of the BSR management message received from the sDU 622. Accordingly, the pDU 621 may generate split BSR information.

For example, in operation 1465, the pDU 621 may transmit a split BSR management message including the split BSR information to the sDU 622. For detailed content of the split BSR management message, the content of FIG. 9A may be referred to.

For example, in operation 1467, the sDU 622 may perform the uplink scheduling for the SCell by using the received the split BSR management message. For example, the sDU 622 may perform the uplink scheduling for the SCell for the terminal 625 based on the amount of the buffer indicated by the split BSR management message. Although not illustrated in FIG. 14B, the sDU 622 may transmit configuration information according to the uplink scheduling to the terminal 625. Thereafter, the terminal 625 may perform an uplink transmission (e.g., a PUSCH transmission) according to the configuration information.

In FIG. 14A and FIG. 14B, a case in which the pDU 621 is the split entity performing scheduling for the inter-DU CA is illustrated, but the present disclosure is not limited thereto. For example, the present disclosure may be applied to a case in which the sDU 622 for the inter-DU CA is a split entity. In addition, in FIG. 14A and FIG. 14B, a case in which the DUs 621 and 622 for the inter-DU CA include one sDU 622 is illustrated, but the present disclosure is not limited thereto. For example, the present disclosure may include a plurality of sDUs for the inter-DU CA.

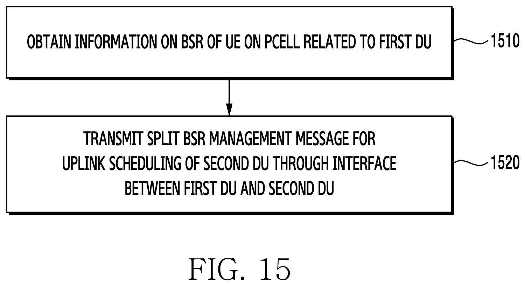

FIG. 15 illustrates an example of an operation flow for a method in which a first DU transmits a split BSR management message for uplink scheduling of a second DU.

At least a portion of the method of FIG. 15 may be performed by the DU #1 621 (or, the pDU 621) of FIG. 6A (hereinafter, a first DU). For example, at least a portion of the method may be controlled by a processor 530 of an electronic device (or a device, an apparatus, a node, an entity) 500 of the first DU. In the following embodiments, each operation may be performed sequentially, but is not necessarily performed sequentially. For example, an order of each operation may be changed, and at least two operations may be performed in parallel.

According to an embodiment, in operation 1510, the electronic device 500 may obtain information on a BSR of a UE (e.g., the terminal 625-1 of FIG. 6A) on a PCell related to the first DU.

For example, the electronic device 500 may receive a BSR management message. For example, the electronic device 500 may receive the BSR management message from another electronic device of a second DU (e.g., a DU #2 622 (or an sDU)) through an interface (e.g., the interface 645 of FIG. 6A) between DUs. For example, the another electronic device may obtain the information on the BSR from the UE. For example, the another electronic device may receive the information on the BSR from the UE through an uplink transmission (e.g., a PUSCH transmission) on an SCell provided by the sDU 622. For example, the another electronic device may generate the BSR management message based on the received information on the BSR, and may transmit the generated BSR management message to the electronic device 500.

Alternatively, for example, the electronic device 500 may obtain the information on the BSR from the UE. For example, the electronic device 500 may obtain the information on the BSR of the UE from an RU related to the PCell of CA configured for the UE. For example, the RU may receive the information on the BSR from the UE through the uplink transmission (e.g., the PUSCH transmission) on the PCell provided by the pDU 621. For example, the electronic device 500 may generate the BSR management message based on the received information on the BSR, and may transmit the generated BSR management message to the another electronic device.

Although not illustrated in FIG. 15, before performing the operation 1510, the electronic device 500 may perform addition and activation of the second DU through signaling with the another electronic device. For detailed content related thereto, the SCell state update management procedure of FIG. 7A and the example 1400 of FIG. 14A may be referred to.

According to an embodiment, in operation 1520, the electronic device 500 may transmit a split BSR management message for uplink scheduling of the second DU through an interface between the first DU and the second DU. For example, the electronic device 500 may transmit the split BSR management message to the second DU (or the another electronic device) related to the SCell of the CA (e.g., inter-DU CA) configured for the UE. For example, the interface may include the interface (e.g., the interface 645 of FIG. 6A) between the DUs.

For example, the electronic device 500 may determine the uplink scheduling of the SCell based on the obtained information on the BSR of the UE. For example, the electronic device 500 may divide a buffer that the UE may use according to an amount of data to be scheduled in the SCell based on the information on the BSR. For example, the electronic device 500 may determine a split buffer occupancy (BO) to be used by the another electronic device. For example, the information on the BSR may be obtained directly from the UE, or may be obtained by the BSR management message received from the another electronic device.

For example, the split BSR management message may include information (or an information element (IE)) on a buffer allocated for the UE. For an example of the information included in the split BSR management message, the content of FIG. 9A and the Table 8 may be referred to.

For example, the another electronic device may perform uplink scheduling for the UE by using the split BSR management message. The terminal may transmit the uplink transmission (e.g., the PUSCH) to the another electronic device according to a scheduled resource. At this time, the UE may perform uplink transmission to the electronic device 500 according to the inter-DU CA.

In an example of FIG. 15, an example of a method in which the electronic device 500 obtains the information on the BSR and generates and transmits the split BSR management message according thereto, thereby performing the uplink scheduling for the SCell of the another electronic device is described, but the present disclosure is not limited thereto.

For example, the electronic device 500 may receive a deactivation request message for the SCell from the another electronic device, and may perform deactivation for the SCell. For detailed content related thereto, FIG. 7B and the Table 6 may be referred to.

In addition, for example, the electronic device 500 may transmit the obtained information on the BSR to the another electronic device in a case that the information on the BSR is obtained through the RU related to the PCell. For detailed content related thereto, FIG. 8B and the Table 7 may be referred to.

In addition, for example, the electronic device 500 may receive a PHR management message including information on a PHR from the another electronic device. The information on the PHR may be used to perform uplink scheduling considering a power (or a transmission power) of the UE. For detailed content related thereto, FIG. 10A and Table 9 may be referred to. Alternatively, the electronic device 500 may transmit the obtained information on the PHR to the another electronic device in a case that the information on the PHR is obtained through the RU related to the PCell. For detailed content related thereto, FIG. 10B and Table 9 may be referred to. For example, the electronic device 500 may generate split PHR information by using the information on the PHR, and may transmit the split PHR information to the another electronic device. For example, the split PHR information may be included in a split PHR management message. For detailed content related thereto, FIG. 11A and Table 10 may be referred to.

In addition, for example, the electronic device 500 may share PUSCH resource allocation information with the another electronic device. For example, the electronic device 500 may transmit a PUSCH resource allocation message to the another electronic device, and may receive a PUSCH resource allocation message from the another electronic device. For detailed content related thereto, FIG. 12A and Table 11 may be referred to.

In addition, for example, the electronic device 500 may receive information on a time offset difference of the SCell to determine whether the SCell of the another electronic device is available. For example, the electronic device 500 may receive an SCell TA management message including the information on the time offset difference. For detailed content related thereto, FIG. 13A and Table 12 may be referred to.

Referring to FIG. 1A to FIG. 15, a device, a method, and a storage medium according to embodiments of the present disclosure may provide CA performed in cells within the same DU as well as CA using cells of different DUs. The device, the method, and the storage medium according to embodiments of the present disclosure may provide a flexible network operation by providing CA using cells of DUs of different operators (or vendors). In other words, the device, the method, and the storage medium according to embodiments of the present disclosure may resolve a constraint of a CA operation between the DUs of different operators. Accordingly, the device, the method, and the storage medium according to embodiments of the present disclosure may provide a service by using a more expanded capacity.

The effects that can be obtained from the present disclosure are not limited to those described above, and any other effects not mentioned herein will be clearly understood by those having ordinary knowledge in the art to which the present disclosure belongs, from the following description.

As described above, a device of a first distributed unit (DU) may comprise at least one processor comprising processing circuitry. The device may comprise memory, comprising one or more storage mediums, storing instructions. The instructions, when executed by the at least one processor individually or collectively, may cause the device to obtain information on a buffer status report (BSR) of a user equipment (UE) on a primary cell (PCell) related to the first DU. The instructions, when executed by the at least one processor individually or collectively, may cause the device to transmit, to a second DU related to a secondary cell (SCell) of carrier aggregation (CA) configured for the UE through an interface between the first DU and the second DU, a split BSR management message for uplink scheduling of the second DU. The split BSR management message may comprise an identifier (ID) of the UE, an index of the PCell, time information when the BSR is received, logical channel group (LCG) ID information of the BSR, and split buffer occupancy (BO) to be used by the second DU.

According to an embodiment, the instructions, when executed by the at least one processor individually or collectively, may cause the device to receive, from the second DU through the interface, a BSR management message comprising the information on the BSR of the UE. The BSR management message may comprise the ID of the UE, an index of the SCell, the time information when the BSR is received by the second DU, a type of the BSR, the LCG ID information of the BSR, and buffer size information according to the type of the BSR.

According to an embodiment, the type of the BSR may indicate one of a short BSR, a short truncated BSR, a long BSR, and a long truncated BSR. The buffer size information may comprise a buffer size of the short BSR or the short truncated BSR in a case that the type indicates the short BSR or the short truncated BSR. The buffer size information may comprise at least one LCG ID and at least one buffer size of the long BSR or the long truncated BSR corresponding to the at least one LCG ID in a case that the type indicates the long BSR or the long truncated BSR.

According to an embodiment, the split BSR management message may further comprise information to indicate whether uplink scheduling of the second DU is allowed.

According to an embodiment, the information on the BSR may be obtained through a radio unit (RU) for the PCell related to the first DU.

According to an embodiment, the instructions, when executed by the at least one processor individually or collectively, may cause the device to obtain information on a power headroom report (PHR) of the UE. The instructions, when executed by the at least one processor individually or collectively, may cause the device to transmit, to the second DU through the interface, a split PHR management message for uplink scheduling of the second DU. The split PHR management message may comprise the index of the PCell, time information when the PHR is received, an index of the PHR, maximum power information of the SCell of the second DU, the number of resource block(RB)s used when the PHR is received, and the maximum number of RBs available by the second DU.

According to an embodiment, the instructions, when executed by the at least one processor individually or collectively, may cause the device to receive, from the second DU through the interface, a PHR management message comprising information on the PHR of the UE. The PHR management message may comprise the ID of the UE, an index of the SCell, the time information when the PHR is received by the second DU, a type of the PHR, a size of the PHR, and power information according to the type of the PHR.

According to an embodiment, the type of the PHR may indicate one of a single PHR and a multiple PHR. The power information may comprise a power headroom (PH) level and a maximum transmission power for the PH level in a case that the type of the PHR indicates the single PHR. The power information may comprise a first PH level, a first maximum transmission power for the first PH level, a second PH level and a second maximum transmission power for the second PH level in a case that the type of the PHR indicates the multiple PHR.

According to an embodiment, the information on the PHR may be obtained through a radio unit (RU) for the PCell related to the first DU.

According to an embodiment, the instructions, when executed by the at least one processor individually or collectively, may cause the device to transmit, to the second DU through the interface, a first uplink resource allocation message comprising first physical uplink shared channel (PUSCH) resource allocation information for the UE of the first DU. The instructions, when executed by the at least one processor individually or collectively, may cause the device to receive, from the second DU through the interface, a second uplink resource allocation message comprising second PUSCH resource allocation information for the UE of the second DU.

According to an embodiment, the first PUSCH resource allocation information may comprise the ID of the UE, the index of the PCell, a transmission time of the first PUSCH, a service type related to the first PUSCH, a modulation and coding scheme (MCS) for the first PUSCH, a transport block size (TBS) for the first PUSCH, the number of RBs allocated for the first PUSCH, the number of layers for the first PUSCH, information indicating a retransmission of the first PUSCH, and a waveform of a signal of the first PUSCH. The second PUSCH resource allocation information may comprise the ID of the UE, the index of the PCell, a transmission time of the second PUSCH, a service type related to the second PUSCH, an MCS for the second PUSCH, a TBS for the second PUSCH, the number of RBs allocated for the second PUSCH, the number of layers for the second PUSCH, information indicating a retransmission of the second PUSCH, and a waveform of a signal of the second PUSCH.

According to an embodiment, the instructions, when executed by the at least one processor individually or collectively, may cause the device to receive, from the second DU, a timing advance (TA) management message for timing synchronization between the second DU and the UE. The TA management message may comprise the ID of the UE, an index of the SCell, and a time offset difference between the second DU and the UE.

According to an embodiment, the UE may comprise a UE configured with one timing advance group (TAG).

According to an embodiment, the instructions, when executed by the at least one processor individually or collectively, may cause device to transmit, to the second DU through the interface, a status update message of the SCell. The instructions, when executed by the at least one processor individually or collectively, may cause device to receive, from the second DU through the interface, a status update response message. The status update message may comprise the ID of the UE, an index of the SCell, and status information of the SCell. The status update response message may comprise the ID of the UE and the index of the SCell. The status information of the SCell may comprisesan activation state and a deactivation state of the SCell.

According to an embodiment, the instructions, when executed by the at least one processor individually or collectively, may cause the device to receive, from the second DU through the interface, a deactivation request message of the SCell. The instructions, when executed by the at least one processor individually or collectively, may cause the device to transmit, to the second DU through the interface, a status update message of the SCell in response to the deactivation request message. The deactivation request message may comprise the ID of the UE and an index of the SCell. The status update message may comprise the ID of the UE, the index of the SCell, and status information of the SCell indicating a deactivation state.

As described above, a method performed by a first distributed unit (DU) may comprise obtaining information on a buffer status report (BSR) of a user equipment (UE) on a primary cell (PCell) related to the first DU. The method may comprise transmitting, to a second DU related to a secondary cell (SCell) of carrier aggregation (CA) configured for the UE through an interface between the first DU and the second DU, a split BSR management message for uplink scheduling of the second DU. The split BSR management message may comprise an identifier (ID) of the UE, an index of the PCell, time information when the BSR is received, logical channel group (LCG) ID information of the BSR, and split buffer occupancy (BO) to be used by the second DU.

According to an embodiment, the method may comprise receiving, from the second DU through the interface, a BSR management message comprising the information on the BSR of the UE. The BSR management message may comprise the ID of the UE, an index of the SCell, the time information when the BSR is received by the second DU, a type of the BSR, the LCG ID information of the BSR, and buffer size information according to the type of the BSR.

According to an embodiment, the method may comprise obtaining information on a power headroom report (PHR) of the UE. The method may comprise transmitting, to the second DU through the interface, a split PHR management message for uplink scheduling of the second DU. The split PHR management message may comprise the index of the PCell, time information when the PHR is received, an index of the PHR, maximum power information of the SCell of the second DU, the number of resource block(RB)s used when the PHR is received, and the maximum number of RBs available by the second DU.

According to an embodiment, the method may comprise receiving, from the second DU through the interface, a PHR management message comprising information on the PHR of the UE. The PHR management message may comprise the ID of the UE, an index of the SCell, the time information when the PHR is received by the second DU, a type of the PHR, a size of the PHR, and power information according to the type of the PHR.

As described above, a non-transitory computer-readable storage medium may store one or more programs including instructions that, when individually or collectively executed by at least one processor comprising processing circuitry of a first distributed unit (DU), cause the first DU to obtain information on a buffer status report (BSR) of a user equipment (UE) on a primary cell (PCell) related to the first DU. The non-transitory computer-readable storage medium may store one or more programs including instructions that, when individually or collectively executed by the at least one processor, cause the first DU to transmit, to a second DU related to a secondary cell (SCell) of carrier aggregation (CA) configured for the UE through an interface between the first DU and the second DU, a split BSR management message for uplink scheduling of the second DU. The split BSR management message may comprise an identifier (ID) of the UE, an index of the PCell, time information when the BSR is received, logical channel group (LCG) ID information of the BSR, and split buffer occupancy (BO) to be used by the second DU.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A device of a first distributed unit (DU) comprising:
at least one processor comprising processing circuitry; and
memory, comprising one or more storage mediums, storing instructions,
wherein the instructions, when executed by the at least one processor individually or collectively, cause the device to:
obtain information on a buffer status report (BSR) of a user equipment (UE) on a primary cell (PCell) related to the first DU, and
transmit, to a second DU related to a secondary cell (SCell) of carrier aggregation (CA) configured for the UE through an interface between the first DU and the second DU, a split BSR management message for uplink scheduling of the second DU,
wherein the split BSR management message comprises an identifier (ID) of the UE, an index of the PCell, time information when the BSR is received, logical channel group (LCG) ID information of the BSR, and split buffer occupancy (BO) to be used by the second DU.

2. The device of claim 1,
wherein the instructions, when executed by the at least one processor individually or collectively, cause the device to:
receive, from the second DU through the interface, a BSR management message comprising the information on the BSR of the UE, and
wherein the BSR management message comprises the ID of the UE, an index of the SCell, the time information when the BSR is received by the second DU, a type of the BSR, the LCG ID information of the BSR, and buffer size information according to the type of the BSR.

3. The device of claim 2,
wherein the type of the BSR indicates one of a short BSR, a short truncated BSR, a long BSR, and a long truncated BSR,
wherein the buffer size information comprises a buffer size of the short BSR or the short truncated BSR in a case that the type indicates the short BSR or the short truncated BSR, and
wherein the buffer size information comprises at least one LCG ID and at least one buffer size of the long BSR or the long truncated BSR corresponding to the at least one LCG ID in a case that the type indicates the long BSR or the long truncated BSR.

4. The device of claim 1,
wherein the split BSR management message further comprises information to indicate whether uplink scheduling of the second DU is allowed.

5. The device of claim 1,
wherein the information on the BSR is obtained through a radio unit (RU) for the PCell related to the first DU.

6. The device of claim 1,
wherein the instructions, when executed by the at least one processor individually or collectively, cause the device to:
obtain information on a power headroom report (PHR) of the UE, and
transmit, to the second DU through the interface, a split PHR management message for uplink scheduling of the second DU,
wherein the split PHR management message comprises the index of the PCell, time information when the PHR is received, an index of the PHR, maximum power information of the SCell of the second DU, the number of resource block(RB)s used when the PHR is received, and the maximum number of RBs available by the second DU.

7. The device of claim 6,
wherein the instructions, when executed by the at least one processor individually or collectively, cause the device to:
receive, from the second DU through the interface, a PHR management message comprising information on the PHR of the UE, and
wherein the PHR management message comprises the ID of the UE, an index of the SCell, the time information when the PHR is received by the second DU, a type of the PHR, a size of the PHR, and power information according to the type of the PHR.

8. The device of claim 7,
wherein the type of the PHR indicates one of a single PHR and a multiple PHR,
wherein the power information comprises a power headroom (PH) level and a maximum transmission power for the PH level in a case that the type of the PHR indicates the single PHR, and
wherein the power information comprises a first PH level, a first maximum transmission power for the first PH level, a second PH level and a second maximum transmission power for the second PH level in a case that the type of the PHR indicates the multiple PHR.

9. The device of claim 1,
wherein the instructions, when executed by the at least one processor individually or collectively, cause the device to:
transmit, to the second DU through the interface, a first uplink resource allocation message comprising first physical uplink shared channel (PUSCH) resource allocation information for the UE of the first DU, and
receive, from the second DU through the interface, a second uplink resource allocation message comprising second PUSCH resource allocation information for the UE of the second DU.

10. The device of claim 9,
wherein the first PUSCH resource allocation information comprises the ID of the UE, the index of the PCell, a transmission time of the first PUSCH, a service type related to the first PUSCH, a modulation and coding scheme (MCS) for the first PUSCH, a transport block size (TBS) for the first PUSCH, the number of RBs allocated for the first PUSCH, the number of layers for the first PUSCH, information indicating a retransmission of the first PUSCH, and a waveform of a signal of the first PUSCH, and
wherein the second PUSCH resource allocation information comprises the ID of the UE, the index of the PCell, a transmission time of the second PUSCH, a service type related to the second PUSCH, an MCS for the second PUSCH, a TBS for the second PUSCH, the number of RBs allocated for the second PUSCH, the number of layers for the second PUSCH, information indicating a retransmission of the second PUSCH, and a waveform of a signal of the second PUSCH.

11. The device of claim 1,
wherein the instructions, when executed by the at least one processor individually or collectively, cause the device to:
receive, from the second DU, a timing advance (TA) management message for timing synchronization between the second DU and the UE, and
wherein the TA management message comprises the ID of the UE, an index of the SCell, and a time offset difference between the second DU and the UE.

12. The device of claim 1,
wherein the instructions, when executed by the at least one processor individually or collectively, cause device to:
transmit, to the second DU through the interface, a status update message of the SCell, and
receive, from the second DU through the interface, a status update response message,
wherein the status update message comprises the ID of the UE, an index of the SCell, and status information of the SCell,
wherein the status update response message comprises the ID of the UE and the index of the SCell, and
wherein the status information of the SCell comprises an activation state and a deactivation state of the SCell.

13. The device of claim 1,
wherein the instructions, when executed by the at least one processor individually or collectively, cause the device to:
receive, from the second DU through the interface, a deactivation request message of the SCell, and
transmit, to the second DU through the interface, a status update message of the SCell in response to the deactivation request message,
wherein the deactivation request message comprises the ID of the UE and an index of the SCell, and
wherein the status update message comprises the ID of the UE, the index of the SCell, and status information of the SCell indicating a deactivation state.

14. A method performed by a first distributed unit (DU) comprising:
obtaining information on a buffer status report (BSR) of a user equipment (UE) on a primary cell (PCell) related to the first DU, and
transmitting, to a second DU related to a secondary cell (SCell) of carrier aggregation (CA) configured for the UE through an interface between the first DU and the second DU, a split BSR management message for uplink scheduling of the second DU,
wherein the split BSR management message comprises an identifier (ID) of the UE, an index of the PCell, time information when the BSR is received, logical channel group (LCG) ID information of the BSR, and split buffer occupancy (BO) to be used by the second DU.

15. A non-transitory computer-readable storage medium stores one or more programs including instructions that, when individually or collectively executed by at least one processor comprising processing circuitry of a first distributed unit (DU), cause the first DU to:
obtain information on a buffer status report (BSR) of a user equipment (UE) on a primary cell (PCell) related to the first DU, and
transmit, to a second DU related to a secondary cell (SCell) of carrier aggregation (CA) configured for the UE through an interface between the first DU and the second DU, a split BSR management message for uplink scheduling of the second DU,
wherein the split BSR management message comprises an identifier (ID) of the UE, an index of the PCell, time information when the BSR is received, logical channel group (LCG) ID information of the BSR, and split buffer occupancy (BO) to be used by the second DU.
